(19) Europäisches Patentamt / European Patent Office / Office européen des brevets

(11) **EP 4 526 864 B1**

(12) **EUROPEAN PATENT SPECIFICATION**

(45) Date of publication and mention
of the grant of the patent:
**01.07.2026 Bulletin 2026/27**

(21) Application number: **22950938.5**

(22) Date of filing: **08.12.2022**

(51) International Patent Classification (IPC):
**G06V 20/62** *(2022.01)*

(52) Cooperative Patent Classification (CPC):
**G06V 20/625; G06V 10/82; G06V 30/148;
G06V 30/19013**

(86) International application number:
**PCT/CN2022/137619**

(87) International publication number:
**WO 2024/011831 (18.01.2024 Gazette 2024/03)**

(54) **VEHICLE LICENSE PLATE RECOGNITION METHOD, DEVICE, TERMINAL AND COMPUTER-READABLE STORAGE MEDIUM**

VERFAHREN ZUR ERKENNUNG EINES FAHRZEUGNUMMERNSCHILDES, VORRICHTUNG, ENDGERÄT UND COMPUTERLESBARES SPEICHERMEDIUM

PROCÉDÉ DE RECONNAISSANCE DE PLAQUE D'IMMATRICULATION DE VÉHICULE, DISPOSITIF, TERMINAL ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.07.2022 CN 202210807536**

(43) Date of publication of application:
**26.03.2025 Bulletin 2025/13**

(73) Proprietor: **Zhejiang Dahua Technology Co., Ltd
Hangzhou, Zhejiang 310051 (CN)**

(72) Inventors:
• **WANG, Lisheng**
**Hangzhou, Zhejiang 310051 (CN)**
• **ZHU, Mengchao**
**Hangzhou, Zhejiang 310051 (CN)**
• **PENG, Xiaoxiao**
**Hangzhou, Zhejiang 310051 (CN)**
• **ZHOU, Zihan**
**Hangzhou, Zhejiang 310051 (CN)**

(74) Representative: **Herrero & Asociados, S.L.
Edificio Aqua - Calle Agustín de Foxá, 4-10, 2ºA
28036 Madrid (ES)**

(56) References cited:
**CN-A- 101 789 119      CN-A- 112 330 601
CN-A- 113 673 513      CN-A- 113 673 513
CN-A- 114 882 492      US-A1- 2012 155 712**

## Description

### TECHNICAL FIELD

The present disclosure relates to the field of image recognition, and in particular to a vehicle license plate recognition method, a device, a terminal, and a computer-readable storage medium.

### BACKGROUND

In an indoor parking area, parking detection may be performed by a monocular camera or a binocular camera. The parking detection may be performed to determine a free parking space and an occupied parking space. The monocular camera may detect only two to three parking spaces, and the binocular camera may detect only four to six parking spaces. The number of parking spaces to be detected is limited. Therefore, a larger number of monocular or binocular cameras needs to be deployed in the parking area, increasing costs. In addition, while performing the parking detection in the art, whether a vehicle is parked at a parking space may be determined based on a confidence level of recognizing a vehicle plate located in the parking space. In response to the confidence level of recognizing the vehicle plate being high, the parking space is determined as being occupied. In response to the confidence level of recognizing the vehicle plate being not high, the parking space is determined as being free. However, the method has high requirements about a camera shooting angle, image resolution, ambient light, and so on. Accuracy of the parking detection may be poor when environmental conditions are poor.

In order to increase the demand of surveillance of all orientations and a large viewing angle, fisheye cameras are gradually being used to replace the traditional monocular cameras. At a same height, the fisheye camera can cover a greater number of parking spaces and also monitor complete information of a vehicle that drives past.

Chinese patent application No. CN113673513A discloses a license plate recognition method. By determining the area shape information of the license plate area in the image, if the area shape information of the license plate area is matched with the area shape information of the abnormal license plate area, the license plate area is corrected through perspective transformation, and the license plate information contained in the license plate area after perspective transformation is identified; therefore, when the license plate area is abnormal, the license plate area can be accurately recognized, and the accuracy of license plate recognition is improved.

### SUMMARY OF THE DISCLOSURE

The invention is defined in the appended claims.

The main technical problem solved by the present disclosure is to provide a vehicle license plate recognition method, a device, a terminal, and a computer-readable storage medium, which solves the problem of a relatively low accuracy of detecting the vehicle license plate in the art.

According to a first aspect, a method of recognizing a vehicle license plate is provided and includes: performing vehicle license plate detection on an obtained fisheye image to obtain a vehicle license plate region; enlarging the vehicle license plate region based on all pixels of the vehicle license plate region to obtain a deformed image of the vehicle license plate in response to the vehicle license plate region being in a non-reference direction, wherein a resolution of the deformed image of the vehicle license plate is higher than a resolution of the vehicle license plate region; and performing reference direction correction on the deformed image of the vehicle license plate to obtain a to-be-detected image; and recognizing the to-be-detected image to obtain an output character corresponding to the vehicle license plate region. The enlarging the vehicle license plate region based on all pixels of the vehicle license plate region to obtain a deformed image of the vehicle license plate, comprises: performing interpolation based on the all pixels in the vehicle license plate region to generate at least one interpolated point; performing weighted fusion on pixel values of all pixels in a predetermined range corresponding to each of the at least one interpolated point to obtain a pixel value of each of the at least one interpolated point; and generating the deformed image of the vehicle license plate based on each of the at least one interpolated point and the pixels. The performing weighted fusion on pixel values of all pixels in a predetermined range corresponding to each of the at least one interpolated point to obtain a pixel value of each of the at least one interpolated point, comprises: for each of the at least one interpolated point, performing weighted fusion of a distance weight and an angle weight corresponding to each of the all pixels within the predetermined range corresponding to the interpolated point to determine a pixel value of the corresponding interpolated point. Before the performing weighted fusion of a distance weight and an angle weight corresponding to each of the all pixels within the predetermined range corresponding to the interpolated point to determine a pixel value of the corresponding interpolated point, the method further comprises: for each of the at least one interpolated point, calculating a distance between each of the all pixels within the predetermined range corresponding to the interpolated point and the interpolated point to obtain a pixel distance corresponding to each of the all pixels; in response to a plurality of pixels being on one straight line with the interpolated point, determining a ratio of distance weights of the plurality of pixels based on a ratio of pixel distance corresponding to the plurality of pixels; based on a distance weight of one of the plurality of pixels located on the one straight line and the ratio of distance weights of the plurality of pixels located on the one straight line, determining a distance weight of any pixel other than the one of the plurality of pixels located on the one straight line. Or, before the performing weighted fusion of a distance weight and an angle weight corresponding to each of the all pixels within the predetermined range corresponding to the interpolated point to determine a pixel value of the corresponding interpolated point, the method further comprises: in response to only one pixel being on a straight line with the interpolated point, determining (S2061d) a distance weight of the one pixel that is on the straight line with the interpolated point based on distance weights of two pixels adjacent to the one pixel, wherein a pixel distance corresponding to each of the two pixels is equal to a pixel distance corresponding to the pixel that is on the straight line with the interpolated point. Before the performing weighted fusion of a distance weight and an angle weight corresponding to each of the all pixels within the predetermined range corresponding to the interpolated point to determine a pixel value of the corresponding interpolated point, the method further comprises: for each of the at least one interpolated point, connecting the interpolated point to each of the all pixels within the predetermined range to obtain a pixel vector corresponding to each of the all pixels; determining a vehicle license plate vector corresponding to the vehicle license plate region based on position information of the vehicle license plate region in the fisheye image, wherein the vehicle license plate vector is non-parallel to the reference direction; obtaining angle information corresponding to each of the all pixels based on the pixel vector of each of the all pixels and the vehicle license plate vector; and determining an angle weight of each of the all pixels based on the angle information. Performing weighted fusion of a distance weight and an angle weight corresponding to each of the all pixels within the predetermined range corresponding to the interpolated point to determine a pixel value of the corresponding interpolated point, comprises: summing the angular weight and the distance weight corresponding to of the all pixels.

According to a second aspect, a terminal is provided and includes a memory, a processor, and a computer program stored in the memory and running on the processor. The processor is configured to execute the computer program to implement the operations in the method as described in the above.

According to a third aspect, a computer-readable storage medium is provided and has a computer program stored thereon. The computer program, when being executed by a processor, is configured to perform the operations in the method as described in the above.

According to the present disclosure, a vehicle license plate recognition method, a device, a terminal, and a computer-readable storage medium are provided. The method includes: performing vehicle license plate recognition on a fisheye image to obtain a vehicle license plate area; in response to the vehicle license plate area being in a non-reference direction, enlarging the vehicle license plate area based on all pixels of the vehicle license plate area to obtain a deformed image of the vehicle license plate; a resolution of the deformed image of the vehicle license plate being higher than a resolution of the vehicle license plate area; performing a reference direction correction on the deformed image of the vehicle license plate to obtain a to-be-detected image; and recognizing the to-be-detected image to obtain an output character corresponding to the vehicle license plate area. According to the method of the present disclosure, vehicle license plate detection is performed on the captured fisheye image to obtain the vehicle license plate area. The vehicle license plate area is enlarged in order to improve the resolution of the vehicle license plate area, such that the output character may be observed easily. Further, a correction process and detection are performed to obtain the output character corresponding to the vehicle license plate area, such that the accuracy of recognizing the vehicle license plate may be improved.

**BRIEF DESCRIPTION OF THE DRAWINGS**

In order to illustrate more clearly the technical solutions in the embodiments of the present disclosure, the following is a brief description of the accompanying drawings to be used in the description of the embodiments. Apparently, the accompanying drawings in the following description show only some embodiments of the present disclosure, and any ordinary skilled person in the art may obtain other drawings based on the following drawings without creative work.

FIG. 1 is a flow chart of a method of recognizing a vehicle license plate according to the present disclosure.
FIG. 2 is a flow chart of a method of recognizing a vehicle license plate according to an embodiment of the present disclosure.
FIG. 3 is a flow chart of a method of recognizing a vehicle license plate according to a detailed implementation of the present disclosure.
FIG. 4 is a flow chart of an operation S201 of the method of recognizing the vehicle license plate shown in FIG. 2, according to an embodiment of the present disclosure.
FIG. 5 is a flow chart of the operation S201 of the method of recognizing the vehicle license plate shown in FIG. 2, according to another embodiment of the present disclosure.
FIG. 6 is a flow chart of an operation S202 of the method of recognizing the vehicle license plate shown in FIG. 2, according to an embodiment of the present disclosure.

FIG. 7 shows pixels within a preset range corresponding to an interpolated point according to an embodiment of the present disclosure.

FIG. 8 shows pixels within a preset range corresponding to an interpolated point according to another embodiment of the present disclosure.

FIG. 9 is a flow chart of an operation S206 of the method of recognizing the vehicle license plate shown in FIG. 2, according to an embodiment of the present disclosure.

FIG. 10 is a flow chart of the operation S206 of the method of recognizing the vehicle license plate shown in FIG. 2, according to another embodiment of the present disclosure.

FIG. 11 is a fitting curved surface of weights of a region corresponding to an interpolated point according to an embodiment of the present disclosure.

FIG. 12 is a schematic view of a candidate character obtained by recognizing a vehicle license plate according to an embodiment of the present disclosure.

FIG. 13 is a schematic view of an apparatus of recognizing the vehicle license plate according to an embodiment of the present disclosure.

FIG. 14 is a schematic view of a terminal according to an embodiment of the present disclosure.

FIG. 15 is a schematic view of a computer-readable storage medium according to an embodiment of the present disclosure.

## DETAILED DESCRIPTION

Technical solutions of embodiments of the present disclosure will be described in detail below by referring to the accompanying drawings of the present disclosure.

In the following description, specific details such as particular system structures, interfaces, techniques and the like are presented for the purpose of illustration and not to limit the present disclosure. The description is provided for understanding the present disclosure more thoroughly.

The term "and/or" in the present disclosure is simply a description of association between associated objects, indicating that three relationships can exists. For example, A and/or B may indicate: A alone is present, both A and B are present, and B alone is present. In addition, the character "/" in the present disclosure generally indicates an "o"" relationship between the preceding and following associated objects. In addition, the word "a plurality of" in the present disclosure means two or more than two.

In order to enable any ordinary skilled person in the art to better understand the technical solution of the present disclosure, a vehicle license plate recognition method is described in further detail below by referring to the accompanying drawings and specific embodiments.

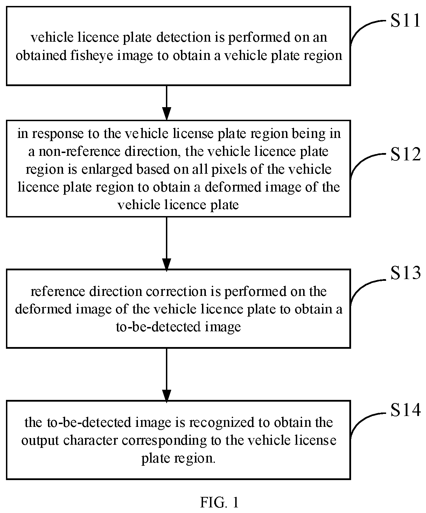

FIG. 1 is a flow chart of a method of recognizing a vehicle license plate according to the present disclosure. The method includes the following operations.

In an operation S11, vehicle license plate detection is performed on an obtained fisheye image to obtain a vehicle plate region.

Specifically, the fisheye image is obtained. Detection of a corner point of the vehicle license plate is performed on the fisheye image to obtain the information of the corner point of the vehicle license plate. A vehicle license plate region corresponding to each vehicle license plate in the fisheye image is determined based on the information of the corner point of the vehicle license plate.

In an embodiment, a vehicle license plate detection model is applied to perform the vehicle license plate detection on the fisheye image to obtain the vehicle license plate region.

In an operation S12, in response to the vehicle license plate region being in a non-reference direction, the vehicle license plate region is enlarged based on all pixels of the vehicle license plate region to obtain a deformed image of the vehicle license plate.

Specifically, a resolution of the deformed image of the vehicle license plate is higher than a resolution of the vehicle license plate region. A weighted fusion is performed on a distance weight and an angle weight corresponding to each of all pixels within a predetermined range corresponding to an interpolated point, and a pixel value of the corresponding interpolated point is determined based on the weighted fusion.

In an embodiment, a distance between each pixel within the predetermined range corresponding to the interpolated point and the interpolated point is calculated to obtain a pixel distance corresponding to each pixel. In response to a plurality of pixels being in one straight line with the interpolated point, a ratio of distance weights of the plurality of pixels is determined based on a ratio of the pixel distances corresponding to the plurality of pixels. Given the distance weight of one pixel in the straight line and the ratio of distance weights of the plurality of pixels of the straight line, the distance weight of any pixel other than the given one pixel in the straight line is determined.

In an embodiment, in response to only one pixel being on the straight line with the interpolated point, a distance weight of the pixel that is on the straight line with the interpolated point is determined based on distance weights of two pixels adjacent to the pixel. The pixel distance corresponding to each of the two pixels is equal to the pixel distance corresponding to the pixel that is on the straight line with the interpolated point.

In an embodiment, the interpolated point is connected to each pixel within the predetermined range to obtain a pixel vector corresponding to each pixel respectively. A vehicle license plate vector corresponding to the vehicle license plate region is determined based on position information of the vehicle license plate region in the fisheye image. The vehicle license plate vector is non-parallel to the reference direction. Angle information corresponding to each pixel is obtained based on each pixel vector and the vehicle license plate vector. An angle weight of each pixel is determined based on the angle information.

In an embodiment, the angle weight corresponding to each pixel is determined by applying an inverse tangent trigonometric function and based on the angle information corresponding to each pixel.

In an operation S13, reference direction correction is performed on the deformed image of the vehicle license plate to obtain a to-be-detected image.

Specifically, information of four corner points of the deformed image of the vehicle license plate is input into a plate correction network, and the plate correction network maps the deformed image of the vehicle license plate to the to-be-detected image. The deformed image of the vehicle license plate is a rotated image, and the to-be-detected image is an image in the reference direction. By correcting the deformed image of the vehicle license plate into the to-be-detected image in the reference direction, an output character may be easily detected, and the accuracy of detecting the output character may be improved. The to-be-detected image is the deformed image of the vehicle license plate in the reference direction.

In an operation S14, the to-be-detected image is recognized to obtain the output character corresponding to the vehicle license plate region.

Specifically, character detection is performed on the to-be-detected image to obtain character information corresponding to each character in the vehicle license plate region. A region image containing the character is extracted from the to-be-detected image. The region image containing the character is a sub-image of the to-be-detected image. The output character corresponding to the vehicle license plate region is determined based on the character information and the region image containing the character.

In an embodiment, the character information includes a candidate character and a confidence level. The confidence level of the candidate character is compared with a predetermined confidence level. In response to the confidence level of the candidate character exceeding the predetermined confidence level, the candidate character corresponding to the confidence level is determined as the output character of the corresponding character.

In an embodiment, in response to a confidence level of each of all candidate characters corresponding to the character not exceeding the predetermined confidence level, the output character corresponding to the character is determined based on the character information and the region image containing the character.

In an embodiment, a similarity between the region image containing the character and each candidate character is calculated, and a candidate character corresponding to a greatest similarity is selected as the output character of the character.

In an embodiment, the candidate character and the region image containing the character are input into the vehicle license plate recognition model for recognition, and the output character corresponding to the character is obtained.

The vehicle license plate recognition method in the present embodiment includes: performing the vehicle license plate detection on the obtained fisheye image to obtain the vehicle plate region; in response to the vehicle license plate region being in the non-reference direction, enlarging the vehicle license plate region based on all pixels of the vehicle license plate region to obtain the deformed image of the vehicle license plate; the resolution of the deformed image of the vehicle license plate being higher than the resolution of the vehicle license plate region; performing reference direction correction on the deformed image of the vehicle license plate to obtain the to-be-detected image; and recognizing the to-be-detected image to obtain the output character corresponding to the vehicle license plate region. For the vehicle license plate recognition method in the present embodiment, the vehicle license plate detection is performed on the obtained fisheye image to obtain the vehicle license plate region, and the vehicle license plate region is enlarged to improve the resolution of the vehicle license plate region, such that the output character may be observed more easily. Subsequently, the correction and the recognition are performed to obtain the output characters corresponding to the vehicle license plate region, such that the recognition accuracy of the vehicle license plate is improved.

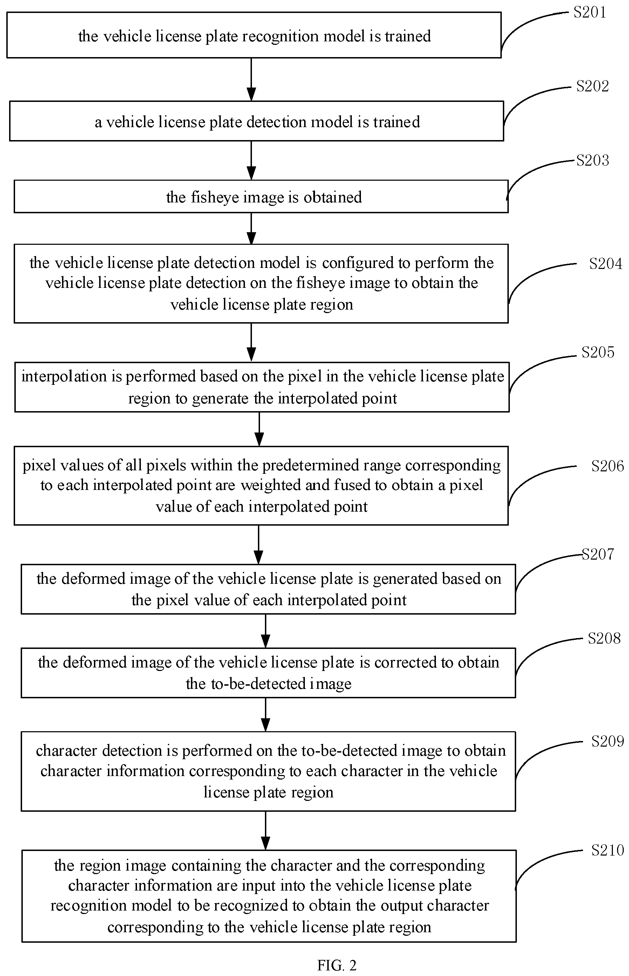

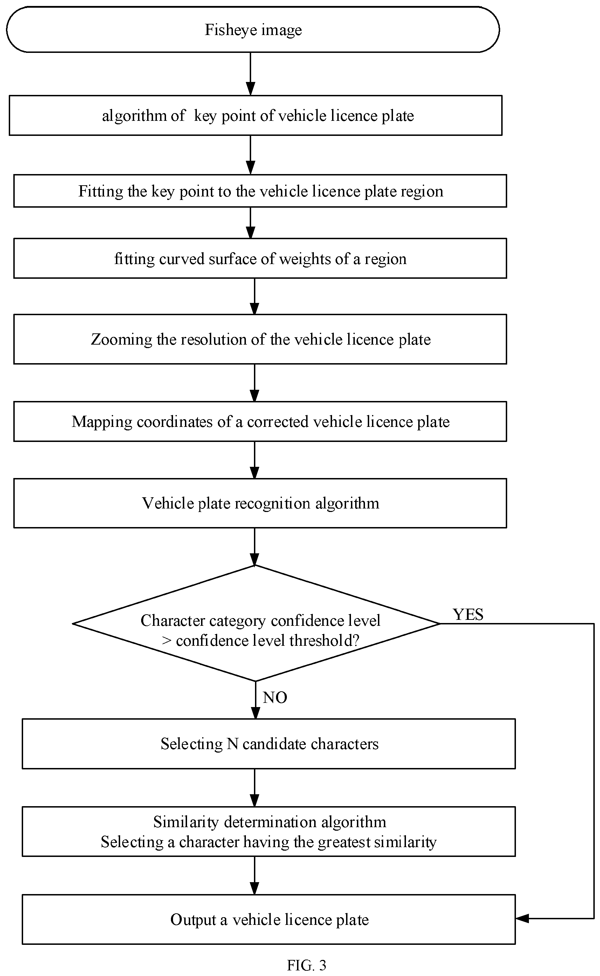

As shown in FIG. 2 and FIG. 3, FIG. 2 is a flow chart of a method of recognizing a vehicle license plate according to an embodiment of the present disclosure; and FIG. 3 is a flow chart of a method of recognizing a vehicle license plate according to a detailed implementation of the present disclosure.

The present embodiment provides a method of recognizing a vehicle license plate, including the following operations.

In an operation S201, the vehicle license plate recognition model is trained.

Specifically, a method of training the vehicle license plate recognition model specifically includes the following operations.

In an embodiment, the vehicle license plate recognition model is trained by an error value between the image containing the vehicle license plate character and a vehicle license plate template.

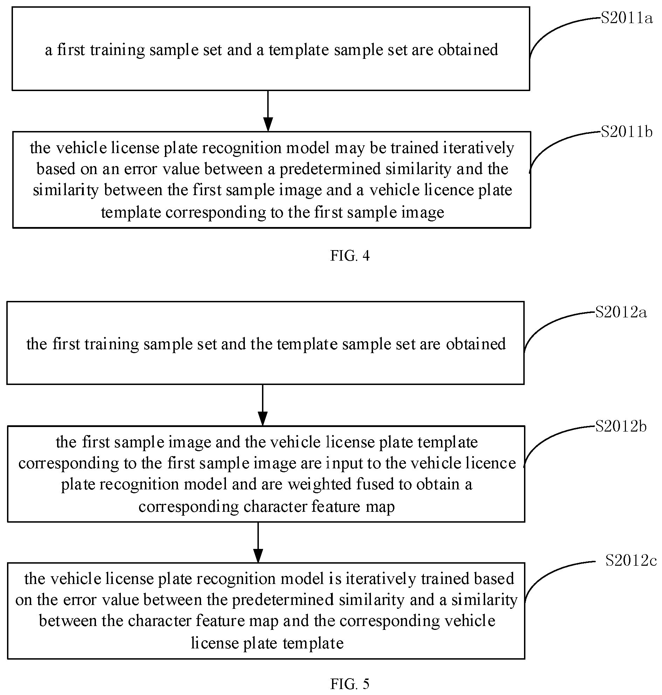

As shown in FIG. 4, FIG. 4 is a flow chart of an operation S201 of the method of recognizing the vehicle license plate shown in FIG. 2, according to an embodiment of the present disclosure.

In an S2011a, a first training sample set and a template sample set are obtained.

Specifically, the first training sample set includes a plurality of first sample images, each containing one vehicle license plate character. The template sample set includes a plurality of vehicle license plate templates, each letter corresponds to one of the plurality of vehicle license plate templates, and each number corresponds to one of the plurality of vehicle license plate templates. The vehicle license plate character in the first sample image is arranged in correspondence with the vehicle license plate template. That is, characters of one vehicle license plate can be presented in various forms to obtain a plurality of images. That is, more than one first sample images can correspond to one vehicle license plate template.

In an embodiment, the template sample set includes templates corresponding to each of 26 letters and templates corresponding to each of 10 numbers. An alphabetic character and a numeric character in the vehicle license plate templates in the template sample set are clear and unambiguous. The vehicle license plate template is the character on a white plate.

The first sample image is an image containing one vehicle license plate character. The first sample image may be an image of each vehicle license plate character extracted from a known vehicle license plate image. Specifically, the output character in a blue license plate, a yellow license plate, a white license plate, and a new energy license plate may be extracted to obtain a small image of each vehicle license plate character, serving as the first sample image. Specifically, the first sample image is an image of the vehicle license plate character extracted from a domestic vehicle license plate.

In order to enrich the training samples, data enhancement may be performed on the existing vehicle license plate character. In detail, a training set corresponding to each character may be enriched by: adding Gaussian noise, salt noise, and pepper noise; randomly adjusting image brightness and image contrast; rotating the vehicle license plate character by a small angle; and performing other data enhancement operations. A fuzzy vehicle license plate character may be constructed to improve generalization performance of the vehicle license plate recognition model.

In an operation S2011b, the vehicle license plate recognition model may be trained iteratively based on an error value between a predetermined similarity and the similarity between the first sample image and a vehicle license plate template corresponding to the first sample image.

In detail, the vehicle license plate recognition model performs character recognition on each first sample image to obtain a predicted character corresponding to each first sample image. A similarity between the predicted character of the first sample image and the vehicle license plate template corresponding to the first sample image may be calculated. The vehicle license plate recognition model is trained iteratively based on an error value between the predetermined similarity and the similarity between the predicted character of the first sample image and the corresponding vehicle license plate template. The vehicle license plate recognition model may be a Siamese network. In another embodiment, the vehicle license plate recognition model may alternatively be a YOLO network.

In an embodiment, a result of the license plate recognition model may be propagated reversely. A weight of the vehicle license plate recognition model may be corrected based on the error value between the predetermined similarity and the similarity between the predicted character of the first sample image and the vehicle license plate template corresponding to the first sample image, such that the vehicle license plate recognition model may be trained.

The first sample image is input to the vehicle license plate recognition model. The vehicle license plate recognition model detects the vehicle license plate character in the first sample image. The training of the vehicle license plate recognition model is stopped in response to the error value between the predetermined similarity and the similarity between the predicted character of the first sample image and the vehicle license plate template corresponding to the first sample image being less than a predetermined threshold, where the predetermined threshold may be determined customizedly, such as, 1%, 5%, and so on.

In an embodiment, the vehicle license plate recognition model is trained by the error value between the image containing the vehicle license plate character and the vehicle license plate template.

As shown in FIG. 5, FIG. 5 is a flow chart of the operation S201 of the method of recognizing the vehicle license plate shown in FIG. 2, according to another embodiment of the present disclosure.

In an operation S2012a, the first training sample set and the template sample set are obtained.

Specifically, the first training sample set includes a plurality of first sample images, and each of the plurality of first sample images includes one vehicle license plate character. The template sample set includes a plurality of vehicle license plate templates. Each letter corresponds to one of plurality of vehicle license plate templates, and each number corresponds to one of plurality of vehicle license plate templates. The vehicle license plate character in the first sample image corresponds to the vehicle license plate template.

The present operation is the same as the operation of S2011a in the above and will not be repeated herein.

In an operation S2012b, the first sample image and the vehicle license plate template corresponding to the first sample image are input to the vehicle license plate recognition model and are weighted fused to obtain a corresponding character feature map.

In detail, the vehicle license plate recognition model is a 4-channel Siamese network. The vehicle license plate recognition model is composed by 4 convolutional layers and 1 fully connected layer. Both the first sample image and the corresponding vehicle license plate template are input into the vehicle license plate recognition model. The first sample image is a 3-channel RGB image, and the corresponding vehicle license plate template is a 1-channel grey scale image. In this case, the first sample image and the corresponding vehicle license plate template are fused to obtain a 4-channel character feature map. Specifically, after performing feature extraction by the convolution layer, pixels of the first sample image and pixels of the corresponding vehicle license plate template are weighted combined and mapped to obtain the character feature map corresponding to the first sample image. That is, after the feature extraction is performed on the first sample image and the corresponding vehicle license plate template by the first convolutional layer in the 4-channel Siamese network the character feature map corresponding to the first sample image is obtained. Dimensionality of the character feature map corresponding to the first sample image is reduced to a predetermined dimension by other convolutional layers.

In an operation S2012c, the vehicle license plate recognition model is iteratively trained based on the error value between the predetermined similarity and a similarity between the character feature map and the corresponding vehicle license plate template.

Specifically, the similarity between the character feature map corresponding to the first sample image and a feature map of the vehicle license plate template corresponding to the first sample image is calculated by the vehicle license plate recognition model. The vehicle license plate recognition model is iteratively trained based on the error value between the predetermined similarity and the similarity between the character feature map corresponding to the first sample image and the feature map of the vehicle license plate template corresponding to the first sample image. The vehicle license plate recognition model may be the Siamese network.

In response to the similarity between the character feature map corresponding to the first sample image and the feature map of the vehicle license plate template corresponding to the first sample image being approaching to 1, the character in the vehicle license plate in the first sample image and the character in the vehicle license plate template belong to one category. In response to the similarity between the character feature map corresponding to the first sample image and the feature map of the vehicle license plate template corresponding to the first sample image being approaching to 0, the character in the vehicle license plate in the first sample image and the character in the vehicle license plate template belong to different categories.

In another embodiment, the vehicle license plate recognition model may be trained by taking an error value between the character feature map of the first sample image and the feature map of the vehicle license plate template corresponding to the first sample image.

In an embodiment, the result of the vehicle license plate recognition model is reversely propagated. The weight of the vehicle license plate recognition model is corrected based on the error value between the predetermined similarity and the similarity between the predicted character of the first sample image and the vehicle license plate template corresponding to the first sample image, such that the vehicle license plate recognition model is trained.

The first sample image is input to the vehicle license plate recognition model, and the vehicle license plate recognition model detects the vehicle license plate characters in the first sample image. When the error value between the predetermined similarity and the similarity between the predicted character of the first sample image and the vehicle license plate template corresponding to the first sample image is less than a predetermined threshold, training of the vehicle license plate recognition model is stopped. The predetermined threshold may be determined customizedly, such as 1%, 5%, and so on.

In an operation S202, a vehicle license plate detection model is trained.

Specifically, specific operations for training the vehicle license plate detection model includes the following.

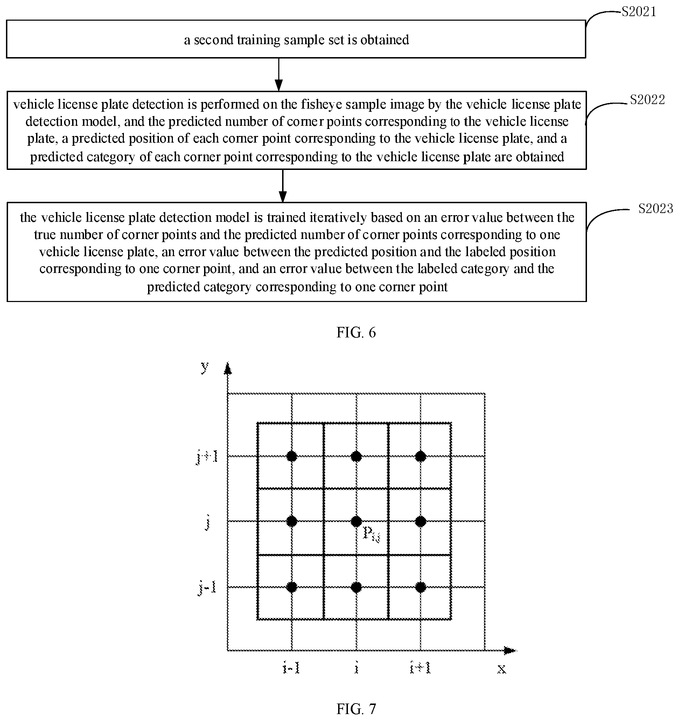

As shown in FIG. 6, FIG. 6 is a flow chart of an operation S202 of the method of recognizing the vehicle license plate shown in FIG. 2, according to an embodiment of the present disclosure.

In an operation S2021, a second training sample set is obtained.

Specifically, the second training sample set includes a plurality of fisheye sample images, each containing a vehicle license plate. The fisheye sample images are obtained by the fisheye camera in advance. Each fisheye sample image has the true number of corner points of the vehicle license plate included in the fisheye sample image, a labeled category and a labeled position of each corner point.

In a specific embodiment, the true number of corner points of one vehicle license plate is four, and the four corner points of the vehicle license plate may determine a true frame of the vehicle license plate. Labeled categories corresponding to the four corner points are an upper left corner, a lower left corner, an upper right corner, and a lower right corner, respectively.

The fisheye sample image in the present embodiment are captured by the fisheye camera arranged in the indoor parking area. A plurality of vehicle license plates, which are identified by human naked eyes and are located near a center point of the fisheye camera, are labeled. Specifically, the true number of corner points of each labeled vehicle license plate, a labeled category corresponding to each corner point of each labeled vehicle license plate, and a labeled location corresponding to each corner point of each labeled vehicle license plate are labeled, respectively.

In an operation S2022, vehicle license plate detection is performed on the fisheye sample image by the vehicle license plate detection model, and the predicted number of corner points corresponding to the vehicle license plate, a predicted position of each corner point corresponding to the vehicle license plate, and a predicted category of each corner point corresponding to the vehicle license plate are obtained.

Specifically, the vehicle license plate detection model refers to the corner-net network structure. The vehicle license plate detection model in the present embodiment is specifically a vehicle-license-plate four-corner-point detection algorithm.

The vehicle license plate detection model performs key point detection on the fisheye sample image to obtain a corner point heat map of the vehicle license plate. The vehicle license detection model predicts the number of corner points corresponding to the vehicle license plate based on the corner point heat map, predicts the predicted category of each corner point, and directly regresses the predicted position of each corner point.

In an operation S2023, the vehicle license plate detection model is trained iteratively based on an error value between the true number of corner points and the predicted number of corner points corresponding to one vehicle license plate, an error value between the predicted position and the labeled position corresponding to one corner point, and an error value between the labeled category and the predicted category corresponding to one corner point.

Specifically, the error value between the true number of corner points and the predicted number of corner points corresponding to one vehicle license plate, the error value between the predicted position and the labeled position corresponding to one corner point, and the error value between the labeled category and the predicted category corresponding to one corner point may be calculated by the vehicle license plate detection model, and the vehicle license plate detection model is trained iteratively based on the error values.

Gaussian distribution is calculated for each corner point in the heat map corresponding to the vehicle license plate. There is a large overlapping area between vehicle license plate prediction frames that are disposed near a real frame of the vehicle license plate. The vehicle license plate detection model is trained iteratively based on the following equation 1.

$$L_{det} = \frac{-1}{N} \sum_{c=1}^{C} \sum_{i=1}^{H} \sum_{j=1}^{W} \begin{cases} (1-P_{cij})^{\alpha} \log(P_{cij}) & if \quad y_{cij} = 1 \\ (1-y_{cij})^{\beta}(P_{cij})^{\alpha} \log(1-P_{cij}) & otherwise \end{cases}$$ (Equation 1)

In the Equation 1, the $P_{cij}$ represents a response value of the predicted corner point heat map at a position (i, j) of the c-th channel (category c). The $y_{cij}$ represents a true response value at the position position (i, j). The N represents the number of corner points. A loss function when the $y_{cij} = 1$ may be easily understood, i.e., understood as a focal loss. The $\alpha$ parameter is used to control a loss weight of a sample that is difficult to be classified. When the $y_{cij}$ equals to a value other than 1, the point (i, j) is not a target corner point of the category c, and a weight of the point (i, j) is controlled by the $\beta$ parameter, and this is because a vehicle license plate prediction frame, which is consisting of mis-detected corner point and is located near the real frame of the vehicle license plate, still has a large overlapping area with the real frame of the vehicle license plate. Loss functions having different weights are used for corner points in different categories. While performing IOU calculation on the vehicle license plate prediction frame and the real frame of the vehicle license plate, the IOU is updated to be an IOU of a rotated region consisting of the four corner points. The hyperparameters $\alpha$ and $\beta$ are set in a range from 0.01 to 0.1.

In an embodiment, a result of the vehicle license plate detection model is reversely propagated. The weight of the vehicle license plate detection model is modified based on the error value between the true number of corner points and the predicted number of corner points corresponding to one vehicle license plate in the fisheye sample image, the error value between the predicted position and the labeled position corresponding to one corner point and for each corner point, and the error value between the labeled category and the predicted category corresponding to the corner point, such that the vehicle license plate detection model is trained.

The fisheye sample image is input into the vehicle license plate detection model. The vehicle license plate detection model detects the corner points of the vehicle license plate in the fisheye sample image. When each of the error value between the true number of corner points and the predicted number of corner points of one vehicle license plate in the fisheye sample image, the error value between the predicted position and the labeled position of one corner point and for each corner point, and the error value between the labeled category and the predicted category corresponding to the corner point is less than a predetermined threshold, training of the vehicle license plate detection model is stopped. The predetermined threshold may be determined customizedly, such as 1 %, 5%, and so on.

In an operation S203, the fisheye image is obtained.

Specifically, the fisheye image of the parking area is captured by the fisheye camera. The fisheye image includes at least one vehicle license plate. Alternatively, fisheye camera may capture a fisheye image of a road.

In an operation S204, the vehicle license plate detection model is configured to perform the vehicle license plate detection on the fisheye image to obtain the vehicle license plate region.

Specifically, the captured fisheye image is inputted into the vehicle license plate detection model trained by the above operation S202. The vehicle license plate detection model performs key point detection on the fisheye image to obtain key point information of the vehicle license plate.

In a specific embodiment, the vehicle license plate detection model performs detection on the four corner points of the vehicle license plate in the fisheye image to obtain information of the four corner points of each vehicle license plate contained in the fisheye image. The information of the four corner points includes the category of each corner point and position coordinates of each corner point.

The vehicle license plate is extracted from the fisheye image to obtain the vehicle license plate region based on the key point information of the vehicle license plate. Specifically, the vehicle license plate region corresponding to each vehicle license plate is determined based on the category of each of the four corner points corresponding to the vehicle license plate and the position coordinates of the four corner points. Since the fisheye image is a hemispherical view, the captured vehicle license plate region is a rotated region. That is, the captured vehicle license plate region is non-parallel to the reference direction. The reference direction is the horizontal direction. The non-reference direction is a non-horizontal direction. In a specific embodiment, the captured vehicle license plate region is in a non-horizontal direction.

The vehicle license plate detection model performs detection on a key region of the rotated vehicle license plate of an original data source of the fisheye image to obtain the vehicle license plate region in the fisheye image.

In an operation S205, interpolation is performed based on the pixel in the vehicle license plate region to generate the interpolated point.

Specifically, in order to increase the resolution of the vehicle license plate region and improve recognition accuracy of the vehicle license plate region, a bilinear interpolation is performed based on each pixel in the vehicle license plate region, and fitting is performed to obtain a plurality of interpolated points corresponding to the pixels. Alternatively, one-dimensional linear interpolation, an average interpolation, the Lagrange interpolation, the Akima interpolation, the Newton interpolation, or the nearest neighbour interpolation may be applied, and an applied interpolation method may be determined based on actual demands.

In a specific embodiment, the following equation 2 is applied to obtain the interpolated points.

$$
\mathrm{f}^{\wedge}(\mathrm{i,\ j}) = \begin{pmatrix} W_{i-1,j+1} & W_{i,j+1} & W_{i+1,j+1} \\ W_{i-1,j} & W_{i,j} & W_{i+1,j} \\ W_{i-1,j-1} & W_{i,j-1} & W_{i+1,j-1} \end{pmatrix} * \begin{pmatrix} f_{i-1,j+1} & f_{i,j+1} & f_{i+1,j+1} \\ f_{i-1,j} & f_{i,j} & f_{i+1,j} \\ f_{i-1,j-1} & f_{i,j-1} & f_{i+1,j-1} \end{pmatrix} \quad \text{(Equation 2)}
$$

In the Equation 2, the f^(i, j) represents the interpolated point. The W represents a weight corresponding to a pixel. The f represents the pixel.

In an operation S206, pixel values of all pixels within the predetermined range corresponding to each interpolated point are weighted and fused to obtain a pixel value of each interpolated point.

Specifically, in order to reduce a difference between the pixel value of the obtained interpolated point and pixel values of pixels surrounding the interpolated point, weighted fusion may be performed based on a distance weight and an angle weight corresponding to each pixel within the predetermined range of the interpolated point, such that the pixel value of the corresponding interpolated point may be determined.

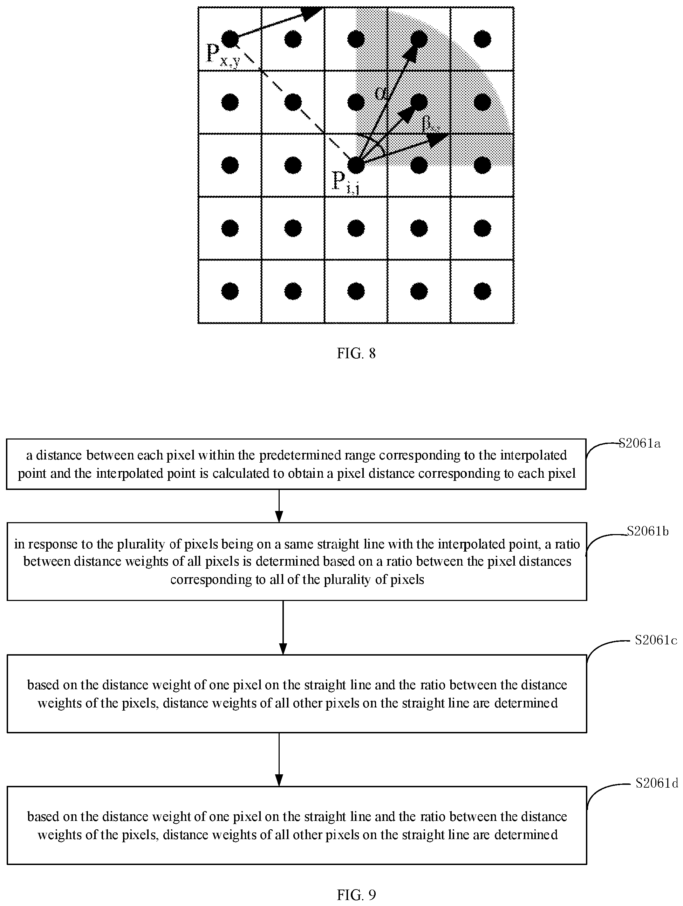

As shown in FIG. 7 and FIG. 8, FIG. 7 shows pixels within a preset range corresponding to an interpolated point according to an embodiment of the present disclosure; and FIG. 8 shows pixels within a preset range corresponding to an interpolated point according to another embodiment of the present disclosure.

In an embodiment, the interpolated point is located at a center of a 9-block grid, and pixel values of the other 8 pixels in the 9-block grid may be selected to determine the pixel value of the interpolated point located at the center of the 9-block grid, as shown in FIG. 7. Alternatively, the interpolated point is located at a center of a 25-block grid, and pixel values of the other 24 pixels in the 25-block grid may be selected to determine the pixel value of the interpolated point located at the center of the 25-block grid, as shown in FIG. 8.

When all pixels corresponding to one interpolated point are located within the vehicle license plate region, the distance weight corresponding to each pixel is calculated based on the following method.

In an embodiment, the distance weight of each pixel within the predetermined range corresponding to the interpolated point is calculated as follows.

As shown in FIG. 9, FIG. 9 is a flow chart of an operation S206 of the method of recognizing the vehicle license plate shown in FIG. 2, according to an embodiment of the present disclosure.

In an operation S2061a, a distance between each pixel within the predetermined range corresponding to the interpolated point and the interpolated point is calculated to obtain a pixel distance corresponding to each pixel.

Specifically, the interpolated point is located at the center of the 25-block grid, and pixel values of the other 24 pixels in the 25-block grid may be selected to determine the pixel value of the interpolated point located at the center of the 25-block grid. The interpolated point $P_{i,j}$ is taken as a center of a circle, a two-dimensional coordinate system is constructed, and a pixel vector corresponding to each pixel is generated. For each of the 24 pixels, a pixel distance between the pixel and the interpolated point is calculated as the pixel distance corresponding to the pixel.

In an operation S2061b, in response to the plurality of pixels being on a same straight line with the interpolated point, a ratio between distance weights of all pixels is determined based on a ratio between the pixel distances corresponding to all of the plurality of pixels.

Specifically, when the plurality of pixels are on the same straight line with the interpolated point, the pixel vectors corresponding to the plurality of pixels are one pixel vector. The pixel distances corresponding to all pixels on the one pixel vector are normalized. The ratio between the distance weights corresponding to the pixels on the one pixel vector is an inverse ratio to the ratio between the corresponding pixel distances.

In an operation S2061c, based on the distance weight of one pixel on the straight line and the ratio between the distance weights of the pixels, distance weights of all other pixels on the straight line are determined.

Specifically, when the distance weight of one pixel on the straight line is determined, the distance weight of each of the other pixels on the same straight line is determined based on the inverse ratio relationship between the distance weight of the pixel on the same straight line and the pixel distance of the corresponding pixel.

In an operation S2061d, in response to only one pixel being in the same straight line with the interpolated point, the distance weight of the one pixel that is in the same straight line with the interpolated point is determined based on distance weights of two pixels adjacent to the one pixel.

The pixel distance corresponding to each of the two adjacent pixels is equal to the pixel distance corresponding to the pixel that is on the same straight line with the interpolated point.

When there is only one pixel on one pixel vector, a sector arc is generated by taking the interpolated point as a center of the arc and taking a pixel distance corresponding to the one pixel as a radius. The distance weight of the one pixel is determined based on the distance weights corresponding to the two pixels adjacent to the one pixel.

Specifically, the distance weights corresponding to the two pixels adjacent to the one pixel are normalized, and the two normalized weights are averaged to obtain the distance weight corresponding to the one pixel.

When the pixel corresponding to the interpolated point is located out of the vehicle license plate region, i.e., the pixel corresponding to the interpolated point exceeds the vehicle license plate region, a weight of the pixel outside the vehicle license plate region is set to a minimum value. For example, the minimum value is in a range of 0.01 to 0.2.

For a pixel that is located within the vehicle license plate region, as the pixel is located nearer to the interpolated point, the pixel has a greater influence on the pixel value of the interpolated point, and the distance weight corresponding to the pixel is greater.

In an embodiment, the angle weight corresponding to each pixel within the predetermined range corresponding to the interpolated point is calculated as follows. When all pixels corresponding to the interpolated point are within the vehicle license plate region, the distance weight corresponding to each pixel is calculated by the following method.

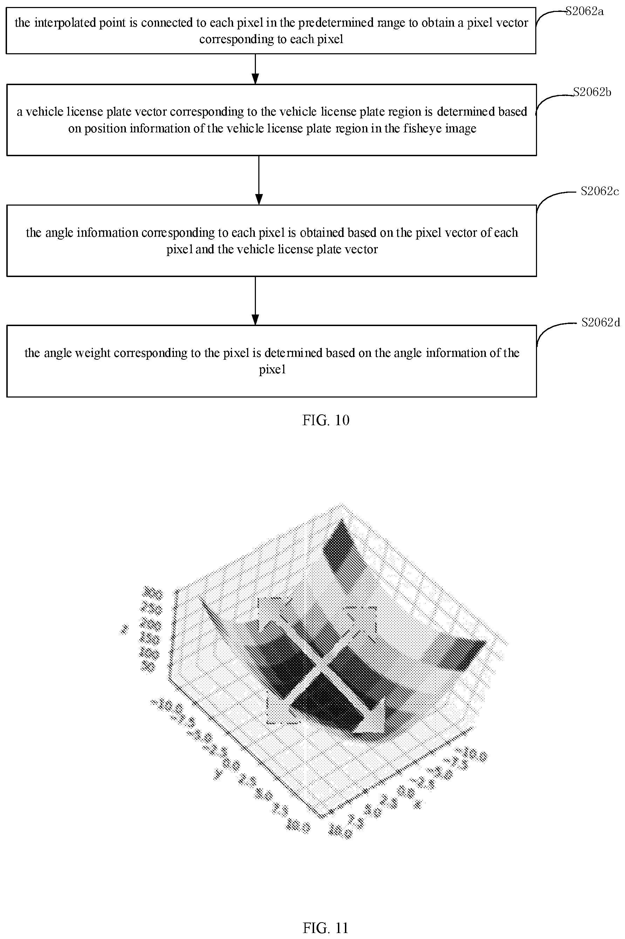

As shown in FIG. 10, FIG. 10 is a flow chart of the operation S206 of the method of recognizing the vehicle license plate shown in FIG. 2, according to another embodiment of the present disclosure.

In an operation S2062a, the interpolated point is connected to each pixel in the predetermined range to obtain a pixel vector corresponding to each pixel.

Specifically, the interpolated point is located at the center of the 25-block grid, and pixel values of the other 24 pixels in the 25-block grid may be selected to determine the pixel value of the interpolated point located at the center of the 25-block grid. The interpolated point $P_{i,j}$ is taken as a center of a circle, a two-dimensional coordinate system is constructed, and the pixel vector corresponding to each pixel is generated.

In an operation S2062b, a vehicle license plate vector corresponding to the vehicle license plate region is determined based on position information of the vehicle license plate region in the fisheye image.

Specifically, the vehicle license plate vector of the vehicle license plate region in the two-dimensional coordinate system is determined based on the position information of the vehicle license plate region in the fisheye image. The vehicle license plate vector is non-parallel to the horizontal direction. Specifically, an angle between the vehicle license plate vector and the horizontal direction is greater than 0° and less than 90°.

In an operation S2062c, the angle information corresponding to each pixel is obtained based on the pixel vector of each pixel and the vehicle license plate vector.

Specifically, the angle information between the pixel vector of each pixel and the vehicle license plate vector is calculated respectively. Specifically, a short edge of the vehicle license plate region near a positive x-axis of the two-dimensional coordinate system is taken as the vehicle license plate vector. The angle information between the pixel vector corresponding to each pixel and the short edge of the vehicle license plate region near the positive x-axis of the two-dimensional coordinate system is calculated.

In an operation S2062d, the angle weight corresponding to the pixel is determined based on the angle information of the pixel.

Specifically, an inverse tangent trigonometric function is applied to determine the angle weight corresponding to each pixel based on the angle information corresponding to each pixel. Alternatively, the angle weight corresponding to the pixel may be determined by other means based on the angle information corresponding to the pixel.

For the pixel that is located within the vehicle license plate region, as the pixel is located nearer to a direction perpendicular to a rotation angle of the interpolated point, the pixel has a greater influence on the pixel value of the interpolated point, and the angular weight of to the pixel is greater.

In an embodiment, as shown in FIG. 8, the pixel value of the interpolated point $P_{i,j}$ is to be calculated. A pixel vector $\vec{\alpha}$ corresponding to a pixel located within a predetermined range of the interpolated point $P_{i,j}$ is obtained. The pixel distance between the pixel and the interpolated point is calculated to be $|\alpha|$. The vehicle license plate vector is $\vec{P}_{i,j}$. Angle information between the pixel vector and the vehicle license plate vector is calculated to be $\beta_{x,y}$, and $\beta_{x,y} \in \left[0, \frac{\pi}{2}\right]$. When the pixel is located outside the vehicle license plate region, the angle weight of the pixel is determined as 0. The angle weight of the pixel is obtained by $\tan^{-1} \beta_{x,y}$.

The distance weight corresponding to the pixel is determined based on the ratio between the pixel distance corresponding to the pixel and the pixel distances of other pixels and based on the distance weights corresponding to the other pixels, wherein the other pixels and the pixel are located on one pixel vector.

As shown in FIG. 11, FIG. 11 is a fitting curved surface of weights of a region corresponding to an interpolated point according to an embodiment of the present disclosure.

The fitting curved surface of weights of the region corresponding to the interpolated point is determined by summing the angular weights and the distance weights of each pixel. When calculating the pixel value of the interpolated point, weights of the pixels associated with the interpolated point are decreasing in the direction of the arrow. That is, the weights of the pixels corresponding to the interpolated points are gradually decreasing from an inside to an outside. A pixel space may be expanded by obtaining the fitting curved surface of weights of the region corresponding to the interpolated point.

In an operation S207, the deformed image of the vehicle license plate is generated based on the pixel value of each interpolated point.

Specifically, pixel values of all interpolated points are obtained by performing the operation S206. The deformed image of the vehicle license plate is generated based on the pixel values of all interpolated points and based on the pixel values corresponding to the pixels. The deformed image of the vehicle license plate is an enlarged image of the vehicle license plate region. The deformed image of the vehicle license plate is an image of the vehicle license plate region having an increased resolution. The deformed image of the vehicle license plate has more vehicle license plate image information than the vehicle license plate region does. The deformed image of the vehicle license plate is non-parallel to the horizontal direction.

In an operation S208, the deformed image of the vehicle license plate is corrected to obtain the to-be-detected image.

Specifically, the information of the four corner points of the deformed image of the vehicle license plate is input into the vehicle license plate correction network. The vehicle license plate correction network maps the deformed image of the vehicle license plate into the to-be-detected image in the horizontal direction. The deformed image of the vehicle license plate is a rotated image, and the to-be-detected image is a horizontally-placed image. By correcting the deformed image of the vehicle license plate into the horizontally-placed to-be-detected image, the output character may be easily detected, and the detection accuracy of the output character may be improved. The to-be-detected image is the deformed image of the vehicle license plate placed in the horizontal direction.

In an operation S209, character detection is performed on the to-be-detected image to obtain character information corresponding to each character in the vehicle license plate region.

Specifically, the character detection model is applied to detect the character in the to-be-detected image to obtain position information of each character in the to-be-detected image and a confidence level of each candidate character recognized to each character.

Since the character at an edge of the to-be-detected may be blurred, the output character can be recognized based on the vehicle license plate recognition model. Specifically, one character corresponds to a plurality of candidate characters.

The confidence level corresponding to the candidate character is compared with a predetermined confidence level. When the confidence level of the candidate character exceeds the predetermined confidence level, the candidate character corresponding to the confidence level exceeding the predetermined confidence level is determined to be an output character corresponding to a character. That is, in response to the confidence level of the candidate character corresponding to the character exceeding the preset confidence level, the candidate character corresponding to the confidence level is determined to be the output character corresponding to the vehicle license plate region.

When the confidence level of each of the plurality of candidate characters corresponding to one character does not exceed the predetermined confidence level, the plurality of candidate characters are ranked according to values of the confidence levels of the plurality of candidate characters. N of the plurality of candidate characters placed at higher rankings are selected and input into the vehicle license plate recognition model. At the same time, a region image of a character corresponding to each of the N candidate characters in the to-be-detected image is extracted and input into the vehicle license plate recognition model. The region image containing the character is a sub-image of the to-be-detected image.

In an operation S210, the region image containing the character and the corresponding character information are input into the vehicle license plate recognition model to be recognized to obtain the output character corresponding to the vehicle license plate region.

Specifically, in response to the confidence levels of all candidate characters corresponding to the characters not exceeding the predetermined confidence level, a similarity between the region image containing the character and the predetermined character corresponding to each candidate character is calculated. The predetermined character corresponding to a greatest similarity is selected as the output character corresponding to the vehicle license plate region.

In an embodiment, N candidate characters are selected and input to the vehicle license plate recognition model. The vehicle license plate recognition model calculates the similarity between the region image of the character corresponding to each of the N candidate characters and the predetermined character corresponding to each of the N candidate characters. A set of vehicle license plate templates includes 10 numeric templates and 26 alphabetic templates. Each of the 26 alphabetic templates and each of the 10 numeric templates may serve as one predetermined character. The predetermined character corresponding to a greatest similarity is selected as the output character for the corresponding one character. Output characters recognized to the plurality of characters corresponding to the vehicle license plate region are combined based on corresponding position information to obtain a vehicle license plate corresponding to the vehicle license plate region. The vehicle license plate recognition model may alternatively be a similarity network model.

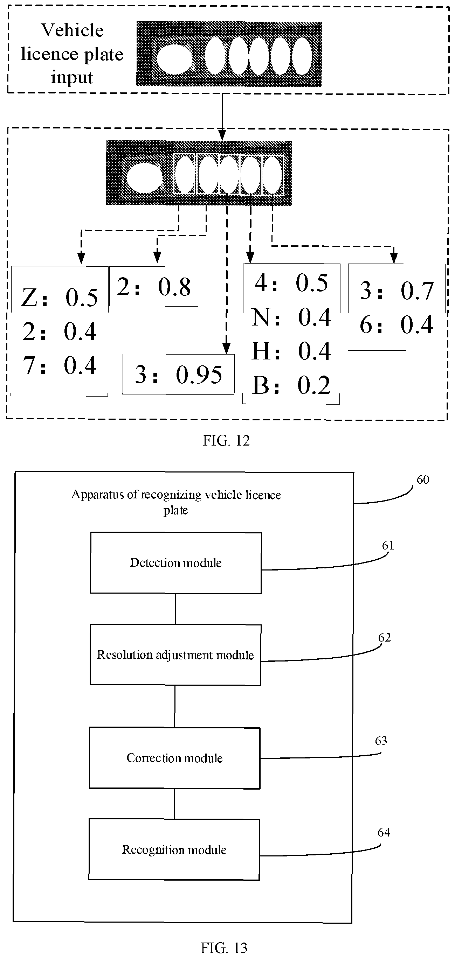

As shown in FIG. 12, FIG. 12 is a schematic view of a candidate character obtained by recognizing a vehicle license plate according to an embodiment of the present disclosure.

In a specific embodiment, the predetermined confidence level is 0.7. Character detection is performed on the to-be-detected image, and candidate characters corresponding to each of five characters are obtained. The candidate characters corresponding to a first character are Z, 2 and 7. The confidence level corresponding to the candidate character Z is 0.5, the confidence level corresponding to the candidate character 2 is 0.4, and the confidence level corresponding to the candidate character 7 is 0.4. The candidate character corresponding to a second character is 2. The confidence level corresponding to the candidate character 2 is 0.8. The candidate characters corresponding to a third character is 3. The confidence level corresponding to the candidate character 3 is 0.95. The candidate characters corresponding to a fourth character are 4, N, H, and B. The confidence level corresponding to the candidate character 4 is 0.5, the confidence level corresponding to the candidate character N is 0.4, the confidence level corresponding to the candidate character H is 0.4, and the confidence level corresponding to the candidate character B is 0.2. The candidate characters corresponding to a fifth character are 3 and 6. The confidence level corresponding to the candidate character 3 is 0.7, and the confidence level corresponding to the candidate character 6 is 0.4.

The confidence level of each of the three candidate characters corresponding to the first character is compared with the predetermined confidence level. In response to the confidence level of each of the three candidate characters being less than 0.7, the three candidate characters are all input into the vehicle license plate recognition model. The vehicle license plate recognition model calculates a similarity between a region image of the first character and the alphabetic template "Z", a similarity between the region image of the first character and the numeric template "2", and a similarity between the region image of the first character and the numeric template "7". The vehicle license plate recognition model determines that the similarity between the region image of the first character and the alphabetic template "Z" is the greatest, and determines that a recognition result of the first character is Z.

The confidence level of the candidate character corresponding to the second character is compared with the predetermined confidence level. The confidence level of the candidate character is greater than the predetermined confidence level, the recognition result of the second character is 2.

The confidence level of the candidate character corresponding to the third character is compared with the predetermined confidence level. The confidence level of the candidate character is greater than the predetermined confidence level, and the recognition result of the third character is 3.

The confidence level of each of the three candidate characters corresponding to the fourth character is compared with the predetermined confidence level. In response to the confidence level of each of the four candidate characters being less than 0.7, three candidate characters whose confidence levels are ranked at the top three are selected and input to the vehicle license plate recognition model. The vehicle license plate recognition model calculates a similarity between a region image of the fourth character and the alphabetic template "H", a similarity between the region image of the fourth character and the alphabetic template "N", and a similarity between the region image of the fourth character and the numeric template "4". The vehicle license plate recognition model determines that the similarity between the region image of the fourth character and the alphabetic template "H" is the greatest, and determines that a recognition result of the fourth character is H.

The confidence level of each of the two candidate characters corresponding to the fifth character is compared with the predetermined confidence level. In response to the confidence level of each of the two candidate characters being less than 0.7, the vehicle license plate recognition model calculates a similarity between a region image of the fifth character and the numeric template "3" and a similarity between the region image of the fifth character and the numeric template "6". The vehicle license plate recognition model determines that the similarity between the region image of the fifth character and the numeric template "3" is the greatest, and determines that a recognition result of the fifth character is 3.

The output characters recognized to the five characters corresponding to the vehicle license plate region are combined based on the corresponding position information to obtain a vehicle license plate corresponding to the vehicle license plate region as Z23H3.

The license plate recognition model in the present embodiment may recognize a blurred vehicle license plate image and a defaced vehicle license plate image, such that the accuracy of recognizing the vehicle license plate is improved.

The vehicle license plate recognition method in the present embodiment includes: performing the vehicle license plate recognition on the obtained fisheye image to obtain the vehicle plate region; in response to the vehicle license plate region being in the non-reference direction, enlarging the vehicle license plate region based on all pixels of the vehicle license plate region to obtain the deformed image of the vehicle license plate; the resolution of the deformed image of the vehicle license plate being higher than the resolution of the vehicle license plate region; reference direction correction is performed on the deformed image of the vehicle license plate to obtain the to-be-detected image; and recognizing the to-be-detected image to obtain the output character corresponding to the vehicle license plate region. For the vehicle license plate recognition method in the present embodiment, the vehicle license plate detection is performed on the obtained fisheye image to obtain the vehicle license plate region, and the vehicle license plate region is enlarged to improve the resolution of the vehicle license plate region, such that the output character may be observed more easily. Subsequently, the correction and the recognition are performed to obtain the output characters corresponding to the vehicle license plate region, such that the recognition accuracy of the vehicle license plate is improved.

As shown in FIG. 13, FIG. 13 is a schematic view of an apparatus of recognizing the vehicle license plate according to an embodiment of the present disclosure. The present embodiment provides a vehicle license plate recognition apparatus 60, the apparatus 60 includes a detection module 61, a resolution adjustment module 62, a correction module 63, and a recognition module 64.

The detection module 61 is configured to perform vehicle license plate detection on an obtained fisheye image to obtain a vehicle license plate region.

In an embodiment, the detection module 61 is further configured to: obtain the fisheye image; perform detection of a corner point of the vehicle license plate on the fisheye image to obtain information of the corner point of the vehicle license plate; and determine a vehicle license plate region corresponding to each vehicle license plate in the fisheye image the information of the corner point of the vehicle license plate.

In an embodiment, the detection module 61 is further configured to take a vehicle license plate detection model to perform the vehicle license plate detection on the fisheye image to obtain the vehicle license plate region.

The resolution adjustment module 62 is configured to, in response to the vehicle license plate region being in a non-reference direction, enlarge the vehicle license plate region based on all pixels in the vehicle license plate region to obtain a deformed image of the vehicle license plate. A resolution of the deformed image of the vehicle license plate is higher than a resolution of the vehicle license plate region.

In an embodiment, the resolution adjustment module 62 is configured to perform interpolation based on the pixels in the vehicle license plate region to generate an interpolated point; perform weighted fusion on pixel values of all pixels in the predetermined range corresponding to of the interpolated point to obtain a pixel value of each interpolated point; and generate the deformed image of the vehicle license plate based on each interpolated point and each pixel.

The resolution adjustment module 62 is further configured to perform weighted fusion of a distance weight and an angle weight corresponding to each pixel within the predetermined range corresponding to the interpolated point to determine the pixel value of the corresponding interpolated point.

The resolution adjustment module 62 is further configured to calculate a distance between each pixel within the predetermined range corresponding to the interpolated point and the interpolated point to obtain a pixel distance corresponding to each pixel; in response to a plurality of pixels being on one straight line with the interpolated point, determine a ratio of distance weights of the plurality of pixels based on a ratio of the pixel distances corresponding to the plurality of pixels; and given the distance weight of one pixel in the straight line and the ratio of distance weights of the plurality of pixels of the straight line, determine the distance weight of any pixel other than the given one pixel in the straight line.

The resolution adjustment module 62 is further configured to: in response to only one pixel being on the straight line with the interpolated point, determine the distance weight of the one pixel that is on the straight line with the interpolated point based on distance weights of two pixels adjacent to the one pixel. The pixel distance corresponding to each of the two pixels is equal to the pixel distance corresponding to the pixel that is on the straight line with the interpolated point.

The resolution adjustment module 62 is further configured to: connect the interpolated point to each pixel within the predetermined range to obtain a pixel vector corresponding to each pixel; determine a vehicle license plate vector corresponding to the vehicle license plate region based on position information of the vehicle license plate region in the fisheye image; obtain angle information corresponding to each pixel based on each pixel vector and the vehicle license plate vector; and determine an angle weight of each pixel based on the angle information.

The resolution adjustment module 62 is further configured to apply an inverse tangent trigonometric function to determine the angle weight corresponding to each pixel based on the angle information corresponding to each pixel.

The correction module 63 is configured to perform reference direction correction on the deformed image of the vehicle license plate to obtain a to-be-detected image.

The correction module 63 is configured to input information of four corner points of the deformed image of the vehicle license plate into a plate correction network. The plate correction network maps the deformed image of the vehicle license plate to the to-be-detected image. The deformed image of the vehicle license plate is a rotated image, and the to-be-detected image is an image in the reference direction. By correcting the deformed image of the vehicle license plate into the to-be-detected image in the reference direction, an output character may be easily detected, and the accuracy of detecting the output character may be improved. The to-be-detected image is the deformed image of the vehicle license plate in the reference direction.

The recognition module 64 is configured to recognize the to-be-detected image to obtain the output character corresponding to the vehicle license plate region.

The recognition module 64 is further configured to: perform character detection on the to-be-detected image to obtain character information corresponding to each character in the vehicle license plate region; extract a region image containing the character from the to-be-detected image, wherein the region image containing the character is a sub-image of the to-be-detected image; and determine the output character corresponding to the vehicle license plate region based on the character information and the region image containing the character.

In an embodiment, the character information includes a candidate character and a confidence level. The recognition module 64 is further configured to: compare the confidence level of the candidate character with a predetermined confidence level; in response to the confidence level of the candidate character exceeding the predetermined confidence level, determine the candidate character corresponding to the confidence level as the output character of the corresponding character; in response to the confidence level of each of all candidate characters corresponding to the character not exceeding the predetermined confidence level, determine the output character corresponding to the character based on the character information and the region image containing the character.

In an embodiment, the recognition module 64 is further configured to: calculate a similarity between the region image containing the character and a predetermined character corresponding to each candidate character; select a predetermined character corresponding to a greatest similarity as the output character of the corresponding character.

In an embodiment, the recognition module 64 is further configured to: input the candidate character and the region image containing the character into the vehicle license plate recognition model to be recognized to obtain the output character corresponding to the vehicle license plate region.

For the vehicle license plate recognition apparatus in the present embodiment, the detection module is configured to: perform the vehicle license plate detection on the obtained fisheye image to obtain the vehicle plate region; the resolution adjustment module is configured to, in response to the vehicle license plate region being in the non-reference direction, enlarge the vehicle license plate region based on all pixels of the vehicle license plate region to obtain the deformed image of the vehicle license plate, wherein the resolution of the deformed image of the vehicle license plate is higher than the resolution of the vehicle license plate region; the correction module is configured to perform reference direction correction on the deformed image of the vehicle license plate to obtain the to-be-detected image; the recognition module is configured to recognize the to-be-detected image to obtain the output character corresponding to the vehicle license plate region. For the vehicle license plate recognition method in the present embodiment, the vehicle license plate detection is performed on the obtained fisheye image to obtain the vehicle license plate region, and the vehicle license plate region is enlarged to improve the resolution of the vehicle license plate region, such that the output character may be observed more easily. Subsequently, the correction and the recognition are performed to obtain the output characters corresponding to the vehicle license plate region, such that the recognition accuracy of the vehicle license plate is improved.

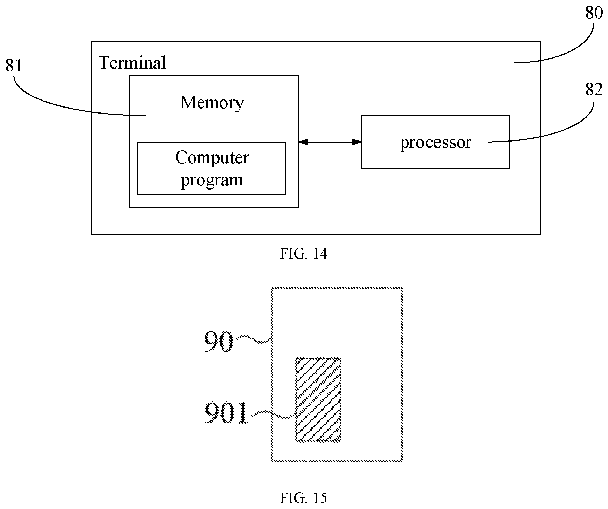

As shown in FIG. 14, FIG. 14 is a schematic view of a terminal according to an embodiment of the present disclosure. The terminal 80 includes a memory 81 and a processor 82 coupled to the memory 81. The processor 82 is configured to execute program instructions stored in the memory 81 to implement the operations of any of the vehicle license plate recognition method embodiments described above. In a specific implementation scenario, the terminal 80 may include, but is not limited to: a microcomputer and a server. In addition, the terminal 80 may include a mobile device such as a laptop computer, a tablet computer, which will not be limited by the present disclosure.

Specifically, the processor 82 is configured to control itself and the memory 81 to implement the operations of any of the vehicle license plate recognition method embodiments described above. The processor 82 may be referred to as a central processing unit (CPU). The processor 82 may be an integrated circuit chip with a signal processing capability. The processor 82 may also be a general purpose processor, a digital signal processor (DSP), an application specific integrated circuit (ASIC), a field-programmable gate array (FPGA) or other programmable logic device, a discrete gate or transistor logic device, a discrete hardware component. The general purpose processor may be a microprocessor or any conventional processor. Alternatively, the processor 82 may be implemented by an integrated circuit chip.

As shown in FIG. 15, FIG. 15 is a schematic view of a computer-readable storage medium according to an embodiment of the present disclosure. The computer readable storage medium 90 stores program instructions 901 capable of being run by the processor, the program instructions 901 are configured to implement the operations of any of the license plate recognition method embodiments described above.

In some embodiments, functions or modules included in the apparatus provided by embodiments of the present disclosure may be configured to perform the methods described in the embodiments. Specific implementation of the apparatus may be referred to the description of the method embodiments in the above, and will not be repeated herein for brevity.

The above description of the various embodiments tends to emphasize differences between the various embodiments. Similar or same aspects of the embodiments may be referred to each other and will not be repeated herein for brevity.

In the various embodiments provided in the present disclosure, it shall be understood that the disclosed methods and apparatus may be implemented by other means. For example, the embodiments of the apparatus described above are merely schematic. For example, modules or units are divided based on logical functions only and may be divided in another way when actually implemented. For example, a unit or a component may be combined or integrated into another system, or some features may be omitted or not implemented. On another aspect, the mutual coupling or direct coupling or communicative connection as shown or discussed in the above may be indirect coupling or communicative connection through some interface, devices or units, and may be electrical, mechanical or in other ways.

In addition, the various functional units in the various embodiments of the present disclosure may be integrated into one processing unit. Alternatively, each of the units may be physically and separately presented, or two or more units may be integrated into one unit. The above integrated units may be implemented either in the form of hardware or in the form of software functional units.

The integrated unit may be stored in a computer readable storage medium when the unit is implemented as a software functional unit and sold or used as a stand-alone product. It is understood that the technical solution of the present application, or a part or all of the technical solution that essentially contributes to the prior art may be embodied in the form of a software product which is stored in a storage medium and includes a number of instructions to enable a computer device (which may be a personal computer, a server, or a network device, and so on) or a processor to perform all or some of the operations of the method of each embodiment of the present disclosure. The aforementioned storage media include: a USB disc, a portable hard drive, a read-only memory (ROM), a random access memory (RAM), a magnetic disc, or an optical disc, and other media that can store program codes.

If the technical solution of the present disclosure involves personal information, before processing the personal information by applying the product of the technical solution of the present disclosure, the individual shall be clearly informed of rules for processing the personal information, and the individual's active consent shall be obtained. If the technical solution of the present disclosure involves sensitive personal information, before processing the personal information by applying the product of the technical solution of the present disclosure, the individual's independent consent shall be obtained, and requirement of "express consent" shall be met. For example, clear and conspicuous signs are arranged at personal information collection devices, such as cameras, informing that personal information has been collected and will be collected. If an individual voluntarily enters the scope of collection, the individual is deemed to have consented to the collection of his/her personal information. Alternatively, the individual authorization may be obtained through pop-up messages or inviting the individual to upload their personal information by him/herself, where personal information processing rules are informed by visible signs/messages on devices that process the personal information. The rules for handling the personal information may include information of who processes the personal information, the purposes for processing the personal information, a processing manner, and types of the processed personal information.

**Claims**

1.  A method of recognizing a vehicle license plate, comprising:

performing (S11) vehicle license plate detection on an obtained fisheye image to obtain a vehicle license plate region;

enlarging (S12) the vehicle license plate region based on all pixels of the vehicle license plate region to obtain a deformed image of the vehicle license plate in response to the vehicle license plate region being in a non-reference direction, wherein a resolution of the deformed image of the vehicle license plate is higher than a resolution of the vehicle license plate region; and

performing (S13) reference direction correction on the deformed image of the vehicle license plate to obtain a to-be-detected image; and

recognizing (S14) the to-be-detected image to obtain an output character corresponding to the vehicle license plate region;

wherein the enlarging (S12) the vehicle license plate region based on all pixels of the vehicle license plate region to obtain a deformed image of the vehicle license plate, comprises:

performing (S205) interpolation based on the all pixels in the vehicle license plate region to generate at least one interpolated point;

performing (S206) weighted fusion on pixel values of all pixels in a predetermined range corresponding to each of the at least one interpolated point to obtain a pixel value of each of the at least one interpolated point; and

generating (S207) the deformed image of the vehicle license plate based on each of the at least one interpolated point and the pixels;

**characterized in that**,

the performing (S206) weighted fusion on pixel values of all pixels in a predetermined range corresponding to each of the at least one interpolated point to obtain a pixel value of each of the at least one interpolated point, comprises:

for each of the at least one interpolated point, performing weighted fusion of a distance weight and an angle weight corresponding to each of the all pixels within the predetermined range corresponding to the interpolated point to determine a pixel value of the corresponding interpolated point;

wherein before the performing weighted fusion of a distance weight and an angle weight corresponding to each of the all pixels within the predetermined range corresponding to the interpolated point to determine a pixel value of the corresponding interpolated point, the method further comprises:

for each of the at least one interpolated point, calculating a distance between each of the all pixels within the predetermined range corresponding to the interpolated point and the interpolated point to obtain a pixel distance corresponding to each of the all pixels;

in response to a plurality of pixels being on one straight line with the interpolated point, determining a ratio of distance weights of the plurality of pixels based on a ratio of pixel distance corresponding to the plurality of pixels;

based on a distance weight of one of the plurality of pixels located on the one straight line and the ratio of distance weights of the plurality of pixels located on the one straight line, determining a distance weight of any pixel other than the one of the plurality of pixels located on the one straight line; or

wherein before the performing weighted fusion of a distance weight and an angle weight corresponding to each of the all pixels within the predetermined range corresponding to the interpolated point to determine a pixel value of the corresponding interpolated point, the method further comprises:

in response to only one pixel being on a straight line with the interpolated point, determining (S2061d) a distance weight of the one pixel that is on the straight line with the interpolated point based on distance weights of two pixels adjacent to the one pixel, wherein a pixel distance corresponding to each of the two pixels is equal to a pixel distance corresponding to the pixel that is on the straight line with the interpolated point; and

wherein before the performing weighted fusion of a distance weight and an angle weight corresponding to each of the all pixels within the predetermined range corresponding to the interpolated point to determine a pixel value of the corresponding interpolated point, the method further comprises:

for each of the at least one interpolated point, connecting the interpolated point to each of the all pixels within the predetermined range to obtain a pixel vector corresponding to each of the all pixels;

determining a vehicle license plate vector corresponding to the vehicle license plate region based on position information of the vehicle license plate region in the fisheye image, wherein the vehicle license plate vector is non-parallel to the reference direction;

obtaining angle information corresponding to each of the all pixels based on the pixel vector of each of the all pixels and the vehicle license plate vector: and

determining an angle weight of each of the all pixels based on the angle information; and

wherein performing weighted fusion of a distance weight and an angle weight corresponding to each of the all pixels within the predetermined range corresponding to the interpolated point to determine a pixel value of the corresponding interpolated point, comprises: summing the angular weight and the distance weight corresponding to of the all pixels.

2. The method according to claim 1, wherein the determining an angle weight of each of the all pixels based on the angle information, comprises:

applying an inverse tangent trigonometric function to determine the angle weight corresponding to each of the all pixels based on the angle information corresponding to each of the all pixels.

3. The method according to claim 1, wherein the recognizing the to-be-detected image to obtain an output character corresponding to the vehicle license plate region, comprises:

performing (S209) character detection on the to-be-detected image to obtain character information corresponding to each character in the vehicle license plate region;

extracting a region image containing the character from the to-be-detected image, wherein the region image containing the character is a sub-image of the to-be-detected image;

determining an output character corresponding to the vehicle license plate region based on the character information and the region image containing the character.

4. The method according to claim 3, wherein the character information comprises at least one candidate character and at least one confidence level, the at least one candidate character and the at least one confidence level are in one-to-one correspondence; and the recognizing the to-be-detected image to obtain an output character corresponding to the vehicle license plate region, comprises:

comparing the at least one confidence level with a predetermined confidence level;

in response to at least one of the at least one confidence level exceeding the predetermined confidence level, determining a candidate character corresponding to the at least one confidence level exceeding the predetermined confidence level as the output character of the corresponding character.

5. The method according to claim 3, wherein the determining an output character corresponding to the vehicle license plate region based on the character information and the region image containing the character, comprises:

inputting the at least one candidate character and the region image containing the character into a vehicle license plate recognition model to be recognized to obtain the output character corresponding to the character;

wherein the vehicle license plate recognition model is trained based on a first training sample set and a template sample set, the first training sample set comprises a plurality of first sample images, each of the plurality of first sample images comprises one vehicle license plate character, the template sample set comprises a plurality of vehicle license plate templates, each alphabet corresponds to one of the plurality of vehicle license plate templates, and each number corresponds to one of the plurality of vehicle license plate templates.

6. The method according to claim 5, wherein the vehicle license plate recognition model is trained by performing the operations of:

obtaining the first training sample set and the template sample set, wherein the first training sample set comprises a plurality of first sample images, each of the plurality of first sample images comprises one vehicle license plate character, the template sample set comprises a plurality of vehicle license plate templates, each alphabet corresponds to one of the plurality of vehicle license plate templates, and each number corresponds to one of the plurality of vehicle license plate templates; and

iteratively training the vehicle license plate recognition model based on an error value between a predetermined similarity and a similarity between each of the plurality of first sample images and a corresponding one of the plurality of vehicle license plate templates.

7. The method according to claim 5, wherein the vehicle license plate recognition model is trained by performing the operations of:

obtaining the first training sample set and the template sample set, wherein the first training sample set comprises a plurality of first sample images, each of the plurality of first sample images comprises one vehicle license plate character, the template sample set comprises a plurality of vehicle license plate templates, each alphabet corresponds to one of the plurality of vehicle license plate templates, and each number corresponds to one of the plurality of vehicle license plate templates;
inputting the plurality of first sample images and the corresponding plurality of vehicle license plate templates are input to the vehicle license plate recognition model, and weighted fusion is performed on the input images and templates to obtain a corresponding feature map; and
iteratively training the vehicle license plate recognition model based on an error value between a predetermined similarity and a similarity between the feature map and a corresponding vehicle license plate template.

8. A terminal, comprising
a memory (81), a processor (82), and a computer program stored in the memory (81) and running on the processor (82), wherein the processor (82) is configured to execute the computer program to implement the operations in the method of recognizing a vehicle license plate as claimed in any one of claims 1 to 7.

9. A computer-readable storage medium, having a computer program (901) stored thereon, wherein the computer program (901), when being executed by a processor, is configured to perform the operations of recognizing a vehicle license plate as claimed in any one of claims 1 to 7.

**Patentansprüche**

1. Ein Verfahren zur Erkennung eines Fahrzeugnummernschildes, umfassend:

Durchführen (S11) einer Fahrzeugnummernschilderkennung an einem erhaltenen Fischaugenbild, um einen Fahrzeugnummernschildbereich zu erhalten;
Vergrößern (S12) des Fahrzeugnummernschildbereiches auf der Grundlage aller Pixel des Fahrzeugnummernschildbereiches, um ein deformiertes Bild des Fahrzeugnummernschildes zu erhalten, wenn sich der Fahrzeugnummernschildbereich in einer Nicht-Referenzrichtung befindet, wobei eine Auflösung des deformierten Bildes des Fahrzeugnummernschildes höher ist als eine Auflösung des Fahrzeugnummernschildbereiches; und
Durchführen (S13) einer Referenzrichtungskorrektur an dem deformierten Bild des Fahrzeugnummernschildes, um ein zu detektierendes Bild zu erhalten; und
Erkennen (S14) des zu detektierenden Bildes, um ein dem Fahrzeugnummernschildbereich entsprechendes Ausgabenzeichen zu erhalten;
wobei das Vergrößern (S12) des Fahrzeugnummernschildbereiches auf der Grundlage aller Pixel des Fahrzeugnummernschildbereiches, um ein deformiertes Bild des Fahrzeugnummernschildes zu erhalten, umfasst:

Durchführen (S205) einer Interpolation auf der Grundlage aller Pixel in dem Fahrzeugnummernschildbereich, um mindestens einen interpolierten Punkt zu erzeugen;
Durchführen (S206) einer gewichteten Fusion an Pixelwerten aller Pixel in einem vorbestimmten Bereich, der jedem der mindestens einen interpolierten Punkte entspricht, um einen Pixelwert jedes der mindestens einen interpolierten Punkte zu erhalten; und
Erzeugen (S207) des deformierten Bildes des Fahrzeugnummernschildes auf der Grundlage jedes der mindestens einen interpolierten Punkte und der Pixel;
**dadurch gekennzeichnet, dass**
das Durchführen (S206) einer gewichteten Fusion an Pixelwerten aller Pixel in einem vorbestimmten Bereich, der jedem der mindestens einen interpolierten Punkte entspricht, um einen Pixelwert jedes der mindestens einen interpolierten Punkte zu erhalten, umfasst:

für jeden der mindestens einen interpolierten Punkte Durchführen einer gewichteten Fusion einer Distanzgewichtung und einer Winkelgewichtung, die jedem aller Pixel innerhalb des dem interpolierten Punkt entsprechenden vorbestimmten Bereiches entsprechen, um einen Pixelwert des entsprechenden interpolierten Punktes zu bestimmen;

wobei das Verfahren vor dem Durchführen der gewichteten Fusion einer Distanzgewichtung und einer Winkelgewichtung, die jedem aller Pixel innerhalb des dem interpolierten Punkt entsprechenden vorbestimmten Bereiches entsprechen, um einen Pixelwert des entsprechenden interpolierten Punktes zu bestimmen, weiter umfasst:

für jeden der mindestens einen interpolierten Punkte Berechnen eines Abstandes zwischen jedem aller Pixel innerhalb des dem interpolierten Punkt entsprechenden vorbestimmten Bereiches und dem interpolierten Punkt, um einen jedem aller Pixel entsprechenden Pixelabstand zu erhalten;

wenn sich mehrere Pixel zusammen mit dem interpolierten Punkt auf einer Geraden befinden, Bestimmen eines Verhältnisses von Distanzgewichtungen der mehreren Pixel auf der Grundlage eines Verhältnisses von Pixelabständen, die den mehreren Pixeln entsprechen;

Bestimmen einer Distanzgewichtung eines beliebigen Pixels außer dem einen der mehreren Pixel, die sich auf der einen Geraden befinden, auf der Grundlage einer Distanzgewichtung eines der mehreren Pixel, das sich auf der einen Geraden befindet, und des Verhältnisses von Distanzgewichtungen der mehreren Pixel, die sich auf der einen Geraden befinden; oder

wobei das Verfahren vor dem Durchführen der gewichteten Fusion einer Distanzgewichtung und einer Winkelgewichtung, die jedem aller Pixel innerhalb des dem interpolierten Punkt entsprechenden vorbestimmten Bereiches entsprechen, um einen Pixelwert des entsprechenden interpolierten Punktes zu bestimmen, weiter umfasst:

wenn sich nur ein Pixel zusammen mit dem interpolierten Punkt auf einer Geraden befindet, Bestimmen (S2061d) einer Distanzgewichtung des einen Pixels, das sich auf der Geraden mit dem interpolierten Punkt befindet, auf der Grundlage von Distanzgewichtungen zweier an das eine Pixel angrenzender Pixel, wobei ein jedem der beiden Pixel entsprechender Pixelabstand gleich einem dem Pixel entsprechenden Pixelabstand ist, das sich auf der Geraden mit dem interpolierten Punkt befindet; und

wobei das Verfahren vor dem Durchführen der gewichteten Fusion einer Distanzgewichtung und einer Winkelgewichtung, die jedem aller Pixel innerhalb des dem interpolierten Punkt entsprechenden vorbestimmten Bereiches entsprechen, um einen Pixelwert des entsprechenden interpolierten Punktes zu bestimmen, weiter umfasst:

für jeden der mindestens einen interpolierten Punkte Verbinden des interpolierten Punktes mit jedem aller Pixel innerhalb des vorbestimmten Bereiches, um einen jedem aller Pixel entsprechenden Pixelvektor zu erhalten;

Bestimmen eines dem Fahrzeugnummernschildbereich entsprechenden Fahrzeugnummernschildvektors auf der Grundlage von Positionsinformationen des Fahrzeugnummernschildbereiches in dem Fischaugenbild, wobei der Fahrzeugnummernschildvektor nicht parallel zu der Referenzrichtung ist;

Erhalten von Winkelinformationen, die jedem aller Pixel entsprechen, auf der Grundlage des Pixelvektors jedes aller Pixel und des Fahrzeugnummernschildvektors; und

Bestimmen einer Winkelgewichtung jedes aller Pixel auf der Grundlage der Winkelinformationen; und

wobei das Durchführen einer gewichteten Fusion einer Distanzgewichtung und einer Winkelgewichtung, die jedem aller Pixel innerhalb des dem interpolierten Punkt entsprechenden vorbestimmten Bereiches entsprechen, um einen Pixelwert des entsprechenden interpolierten Punktes zu bestimmen, umfasst: Summieren der Winkelgewichtung und der Distanzgewichtung, die jedem aller Pixel entsprechen.

2. Das Verfahren gemäß Anspruch 1, wobei das Bestimmen einer Winkelgewichtung jedes aller Pixel auf der Grundlage der Winkelinformationen umfasst:
Anwenden einer inversen Tangensfunktion zur Bestimmung der jedem aller Pixel entsprechenden Winkelgewichtung auf der Grundlage der jedem aller Pixel entsprechenden Winkelinformationen.

3. Das Verfahren gemäß Anspruch 1, wobei das Erkennen des zu detektierenden Bildes, um ein dem Fahrzeugnummernschildbereich entsprechendes Ausgabezeichen zu erhalten, umfasst:

Durchführen (S209) einer Zeichendetektion an dem zu detektierenden Bild, um jedem Zeichen in dem Fahrzeugnummernschildbereich entsprechende Zeicheninformationen zu erhalten;

Extrahieren eines das Zeichen enthaltenden Bereichsbildes aus dem zu detektierenden Bild, wobei das das Zeichen enthaltende Bereichsbild ein Teilbild des zu detektierenden Bildes ist;

Bestimmen eines dem Fahrzeugnummernschildbereich entsprechenden Ausgabezeichens auf der Grundlage der Zeicheninformationen und des das Zeichen enthaltenden Bereichsbildes.

4. Das Verfahren gemäß Anspruch 3, wobei die Zeicheninformationen mindestens ein Kandidatenzeichen und mindestens ein Konfidenzniveau umfassen, wobei das mindestens eine Kandidatenzeichen und das mindestens eine Konfidenzniveau einander jeweils eindeutig zugeordnet sind; und wobei das Erkennen des zu detektierenden Bildes, um ein dem Fahrzeugnummernschildbereich entsprechendes Ausgabezeichen zu erhalten, umfasst:

Vergleichen des mindestens einen Konfidenzniveaus mit einem vorbestimmten Konfidenzniveau;
wenn mindestens eines der mindestens einen Konfidenzniveaus das vorbestimmte Konfidenzniveau überschreitet, Bestimmen des zu dem das vorbestimmte Konfidenzniveau überschreitenden Konfidenzniveau gehörenden Kandidatenzeichens als Ausgabezeichen des entsprechenden Zeichens.

5. Das Verfahren gemäß Anspruch 3, wobei das Bestimmen eines dem Fahrzeugnummernschildbereich entsprechenden Ausgabezeichens auf der Grundlage der Zeicheninformationen und des das Zeichen enthaltenden Bereichsbildes umfasst:

Eingeben des mindestens einen Kandidatenzeichens und des das Zeichen enthaltenden Bereichsbildes in ein Fahrzeugnummernschild-Erkennungsmodell, um ein dem Zeichen entsprechendes Ausgabezeichen zu erhalten;
wobei das Fahrzeugnummernschild-Erkennungsmodell auf der Grundlage eines ersten Trainingsdatensatzes und eines Vorlagendatensatzes trainiert ist, wobei der erste Trainingsdatensatz eine Mehrzahl erster Beispielbilder umfasst, wobei jedes der Mehrzahl erster Beispielbilder ein Fahrzeugnummernschildzeichen umfasst, wobei der Vorlagendatensatz eine Mehrzahl von Fahrzeugnummernschildvorlagen umfasst, wobei jedem alphabetischen Zeichen eine der Mehrzahl von Fahrzeugnummernschildvorlagen entspricht und wobei jeder Ziffer eine der Mehrzahl von Fahrzeugnummernschildvorlagen entspricht.

6. Das Verfahren gemäß Anspruch 5, wobei das Training des Fahrzeugnummernschild-Erkennungsmodells durch Ausführen der folgenden Schritte erfolgt:

Bereitstellen des ersten Trainingsdatensatzes und des Vorlagendatensatzes, wobei der erste Trainingsdatensatz eine Mehrzahl erster Beispielbilder umfasst, wobei jedes der Mehrzahl erster Beispielbilder ein Fahrzeugnummernschildzeichen umfasst, wobei der Vorlagendatensatz eine Mehrzahl von Fahrzeugnummernschildvorlagen umfasst, wobei jedem alphabetischen Zeichen eine der Mehrzahl von Fahrzeugnummernschildvorlagen entspricht und wobei jeder Ziffer eine der Mehrzahl von Fahrzeugnummernschildvorlagen entspricht; und
iteratives Trainieren des Fahrzeugnummernschild-Erkennungsmodells auf der Grundlage eines Fehlerwertes zwischen einer vorgegebenen Ähnlichkeit und einer Ähnlichkeit zwischen jedem der Mehrzahl erster Beispielbilder und einer entsprechenden der Mehrzahl von Fahrzeugnummernschildvorlagen.

7. Das Verfahren gemäß Anspruch 5, wobei das Training des Fahrzeugnummernschild-Erkennungsmodells durch Ausführen der folgenden Schritte erfolgt:

Bereitstellen des ersten Trainingsdatensatzes und des Vorlagendatensatzes, wobei der erste Trainingsdatensatz eine Mehrzahl erster Beispielbilder umfasst, wobei jedes der Mehrzahl erster Beispielbilder ein Fahrzeugnummernschildzeichen umfasst, wobei der Vorlagendatensatz eine Mehrzahl von Fahrzeugnummernschildvorlagen umfasst, wobei jedem alphabetischen Zeichen eine der Mehrzahl von Fahrzeugnummernschildvorlagen entspricht und wobei jeder Ziffer eine der Mehrzahl von Fahrzeugnummernschildvorlagen entspricht; und
Eingeben der Mehrzahl erster Beispielbilder und der entsprechenden Mehrzahl von Fahrzeugnummernschildvorlagen in das Fahrzeugnummernschild-Erkennungsmodell, wobei eine gewichtete Fusion der Eingabebilder und Vorlagen durchgeführt wird, um eine entsprechende Merkmalskarte zu erhalten; und
iteratives Trainieren des Fahrzeugnummernschild-Erkennungsmodells auf der Grundlage eines Fehlerwertes zwischen einer vorgegebenen Ähnlichkeit und einer Ähnlichkeit zwischen der Merkmalskarte und einer entsprechenden Fahrzeugnummernschildvorlage.

8. Ein Endgerät, umfassend einen Speicher (81), einen Prozessor (82) sowie ein im Speicher (81) gespeichertes und auf dem Prozessor (82) laufendes Computerprogramm, wobei der Prozessor (82) dazu konfiguriert ist, das Computerprogramm auszuführen, um die Schritte des Verfahrens zur Erkennung eines Fahrzeugnummernschildes gemäß einem der Ansprüche 1 bis 7 zu implementieren.

9. Ein computerlesbares Speichermedium, auf dem ein Computerprogramm (901) gespeichert ist, wobei das Computerprogramm (901) bei Ausführung durch einen Prozessor dazu konfiguriert ist, die Schritte des Verfahrens zur Erkennung eines Fahrzeugnummernschildes gemäß einem der Ansprüche 1 bis 7 auszuführen.

**Revendications**

1. Un procédé de reconnaissance d'une plaque d'immatriculation de véhicule, comprenant :

la réalisation (S11) d'une détection de plaque d'immatriculation de véhicule sur une image fisheye obtenue afin d'obtenir une région de plaque d'immatriculation de véhicule ;
l'agrandissement (S12) de la région de plaque d'immatriculation de véhicule sur la base de tous les pixels de ladite région afin d'obtenir une image déformée de la plaque d'immatriculation de véhicule en réponse au fait que la région de plaque d'immatriculation de véhicule se trouve dans une direction non de référence, dans lequel une résolution de l'image déformée de la plaque d'immatriculation de véhicule est supérieure à la résolution de la région de plaque d'immatriculation de véhicule ; et
la réalisation (S13) d'une correction de direction de référence sur l'image déformée de la plaque d'immatriculation de véhicule afin d'obtenir une image à détecter ; et
la reconnaissance (S14) de l'image à détecter afin d'obtenir un caractère de sortie correspondant à la région de plaque d'immatriculation de véhicule ;
dans lequel l'agrandissement (S12) de la région de plaque d'immatriculation de véhicule sur la base de tous les pixels de ladite région afin d'obtenir une image déformée de la plaque d'immatriculation de véhicule comprend :

la réalisation (S205) d'une interpolation sur la base de tous les pixels de la région de plaque d'immatriculation de véhicule afin de générer au moins un point interpolé ;
la réalisation (S206) d'une fusion pondérée des valeurs de pixels de tous les pixels dans une plage prédéterminée correspondant à chacun des au moins un point interpolé afin d'obtenir une valeur de pixel de chacun des au moins un point interpolé ; et
la génération (S207) de l'image déformée de la plaque d'immatriculation de véhicule sur la base de chacun des au moins un point interpolé et des pixels.
**caractérisé en ce que**
la réalisation (S206) d'une fusion pondérée sur des valeurs de pixels de tous les pixels dans une plage prédéterminée correspondant à chacun des au moins un point interpolé afin d'obtenir une valeur de pixel de chacun des au moins un point interpolé comprend :

pour chacun des au moins un point interpolé, la réalisation d'une fusion pondérée d'un poids de distance et d'un poids d'angle correspondant à chacun de tous les pixels situés dans la plage prédéterminée correspondant au point interpolé afin de déterminer une valeur de pixel du point interpolé correspondant ;
dans lequel, avant la réalisation de la fusion pondérée d'un poids de distance et d'un poids d'angle correspondant à chacun de tous les pixels situés dans la plage prédéterminée correspondant au point interpolé afin de déterminer une valeur de pixel du point interpolé correspondant, le procédé comprend en outre :

pour chacun des au moins un point interpolé, le calcul d'une distance entre chacun de tous les pixels situés dans la plage prédéterminée correspondant au point interpolé et le point interpolé afin d'obtenir une distance de pixel correspondant à chacun de tous les pixels ;
en réponse au fait qu'une pluralité de pixels se trouvent sur une même ligne droite avec le point interpolé, la détermination d'un rapport de poids de distance desdits pixels sur la base d'un rapport de distances de pixels correspondant aux pixels de ladite pluralité de pixels ;
sur la base d'un poids de distance de l'un des pixels de ladite pluralité de pixels situé sur la ligne droite et du rapport de poids de distance des pixels de ladite pluralité de pixels situés sur ladite ligne droite, la détermination d'un poids de distance de tout pixel autre que ledit pixel appartenant à ladite pluralité de pixels situés sur la ligne droite ; ou

dans lequel, avant la réalisation de la fusion pondérée d'un poids de distance et d'un poids d'angle correspondant à chacun des tous les pixels situés dans la plage prédéterminée correspondant au point interpolé afin de déterminer une valeur de pixel du point interpolé correspondant, le procédé comprend en outre :

la détermination (S2061d), en réponse au fait qu'un seul pixel se trouve sur une même ligne droite avec le point interpolé, d'un poids de distance pour ledit pixel situé sur ladite ligne droite avec le point interpolé, sur la base des poids de distance de deux pixels adjacents audit pixel, dans laquelle une distance de pixel correspondant à chacun des deux pixels est égale à une distance de pixel correspondant au pixel situé sur ladite ligne droite avec le point interpolé ; et dans laquelle, avant la réalisation de la fusion pondérée d'un poids de distance et d'un poids d'angle correspondant à chacun de tous les pixels situés dans la plage prédéterminée correspondant au point interpolé afin de déterminer une valeur de pixel du point interpolé correspondant, le procédé comprend en outre :

pour chacun des au moins un point interpolé, la liaison du point interpolé à chacun des pixels situés dans la plage prédéterminée afin d'obtenir un vecteur de pixel correspondant à chacun des pixels ;
la détermination d'un vecteur de plaque d'immatriculation de véhicule correspondant à la région de plaque d'immatriculation de véhicule sur la base d'informations de position de ladite région dans l'image fisheye, òu le vecteur de plaque d'immatriculation de véhicule n'est pas parallèle à la direction de référence ;
l'obtention d'informations angulaires correspondant à chacun des pixels sur la base du vecteur de pixel de chacun des pixels et du vecteur de plaque d'immatriculation de véhicule ;
la détermination d'un poids d'angle de chacun des pixels sur la base des informations angulaires ; et
ôu la réalisation de la fusion pondérée d'un poids de distance et d'un poids d'angle correspondant à chacun des pixels situés dans la plage prédéterminée correspondant au point interpolé afin de déterminer une valeur de pixel du point interpolé correspondant comprend : la sommation du poids angulaire et du poids de distance de chacun des pixels.

2. Le procédé selon la revendication 1, dans lequel la détermination d'un poids d'angle de chacun des pixels sur la base des informations angulaires comprend :
l'application d'une fonction trigonométrique arc tangente afin de déterminer le poids d'angle correspondant à chacun des pixels sur la base des informations angulaires correspondant à chacun des pixels.

3. Le procédé selon la revendication 1, dans lequel la reconnaissance de l'image à détecter afin d'obtenir un caractère de sortie correspondant à la région de plaque d'immatriculation de véhicule comprend :

la réalisation (S209) d'une détection de caractères sur l'image à détecter afin d'obtenir des informations de caractères correspondant à chaque caractère dans la région de plaque d'immatriculation de véhicule ;
l'extraction d'une image de région contenant le caractère à partir de l'image à détecter, dans lequel l'image de région contenant le caractère est une sous-image de l'image à détecter ;
la détermination d'un caractère de sortie correspondant à la région de plaque d'immatriculation de véhicule sur la base des informations de caractères et de l'image de région contenant le caractère.

4. Le procédé selon la revendication 3, dans lequel les informations de caractères comprennent au moins un caractère candidat et au moins un niveau de confiance, ledit au moins un caractère candidat et ledit au moins un niveau de confiance étant en correspondance univoque ; et dans lequel la reconnaissance de l'image à détecter afin d'obtenir un caractère de sortie correspondant à la région de plaque d'immatriculation de véhicule comprend :

la comparaison du ou des niveaux de confiance avec un niveau de confiance prédéterminé ;
en réponse au fait qu'au moins un des niveaux de confiance dépasse le niveau de confiance prédéterminé, la détermination d'un caractère candidat correspondant audit niveau de confiance dépassant le niveau de confiance prédéterminé en tant que caractère de sortie du caractère correspondant.

**5.** Le procédé selon la revendication 3, dans lequel la détermination d'un caractère de sortie correspondant à la région de plaque d'immatriculation de véhicule sur la base des informations de caractères et de l'image de région contenant le caractère comprend :

l'entrée du ou des caractères candidats et de l'image de région contenant le caractère dans un modèle de reconnaissance de plaque d'immatriculation de véhicule afin d'être reconnus pour obtenir le caractère de sortie correspondant au caractère ;

dans lequel le modèle de reconnaissance de plaque d'immatriculation de véhicule est entraîné sur la base d'un premier ensemble d'échantillons d'entraînement et d'un ensemble d'échantillons de modèles, le premier ensemble d'échantillons d'entraînement comprenant une pluralité de premières images d'échantillons, chacune desdites premières images d'échantillons comprenant un caractère de plaque d'immatriculation de véhicule, l'ensemble d'échantillons de modèles comprenant une pluralité de modèles de plaques d'immatriculation de véhicule, chaque caractère alphabétique correspondant à l'un desdits modèles de plaques d'immatriculation de véhicule, et chaque chiffre correspondant à l'un desdits modèles de plaques d'immatriculation de véhicule.

**6.** Le procédé selon la revendication 5, dans lequel le modèle de reconnaissance de plaque d'immatriculation de véhicule est entraîné en exécutant les opérations suivantes :

obtention du premier ensemble d'échantillons d'entraînement et de l'ensemble d'échantillons de modèles, dans lequel le premier ensemble d'échantillons d'entraînement comprend une pluralité de premières images d'échantillons, chacune desdites premières images d'échantillons comprenant un caractère de plaque d'immatriculation de véhicule, l'ensemble d'échantillons de modèles comprenant une pluralité de modèles de plaques d'immatriculation de véhicule, chaque caractère alphabétique correspondant à l'un desdits modèles de plaques d'immatriculation de véhicule, et chaque chiffre correspondant à l'un desdits modèles de plaques d'immatriculation de véhicule ; et

entraînement itératif du modèle de reconnaissance de plaque d'immatriculation de véhicule sur la base d'une valeur d'erreur entre une similarité prédéterminée et une similarité entre chacune desdites premières images d'échantillons et un modèle correspondant parmi lesdits modèles de plaques d'immatriculation de véhicule.

**7.** Le procédé selon la revendication 5, dans lequel le modèle de reconnaissance de plaque d'immatriculation de véhicule est entraîné en exécutant les opérations suivantes :

obtention du premier ensemble d'échantillons d'entraînement et de l'ensemble d'échantillons de modèles, dans lequel le premier ensemble d'échantillons d'entraînement comprend une pluralité de premières images d'échantillons, chacune desdites premières images d'échantillons comprenant un caractère de plaque d'immatriculation de véhicule, l'ensemble d'échantillons de modèles comprenant une pluralité de modèles de plaques d'immatriculation de véhicule, chaque caractère alphabétique correspondant à l'un desdits modèles de plaques d'immatriculation de véhicule, et chaque chiffre correspondant à l'un desdits modèles de plaques d'immatriculation de véhicule ;

entrée de la pluralité de premières images d'échantillons et de la pluralité correspondante de modèles de plaques d'immatriculation de véhicule dans le modèle de reconnaissance de plaque d'immatriculation de véhicule, une fusion pondérée étant effectuée sur les images et les modèles d'entrée afin d'obtenir une carte de caractéristiques correspondante ; et

entraînement itératif du modèle de reconnaissance de plaque d'immatriculation de véhicule sur la base d'une valeur d'erreur entre une similarité prédéterminée et une similarité entre la carte de caractéristiques et un modèle correspondant de plaques d'immatriculation de véhicule.

**8.** Un terminal, comprenant une mémoire (81), un processeur (82) et un programme informatique stocké dans la mémoire (81) et exécuté sur le processeur (82), dans lequel le processeur (82) est configuré pour exécuter le programme informatique afin de mettre en œuvre les opérations du procédé de reconnaissance d'une plaque d'immatriculation de véhicule selon l'une quelconque des revendications 1 à 7.

**9.** Un support de stockage lisible par ordinateur, sur lequel est stocké un programme informatique (901), dans lequel le programme informatique (901), lorsqu'il est exécuté par un processeur, est configuré pour exécuter les opérations de reconnaissance d'une plaque d'immatriculation de véhicule selon l'une quelconque des revendications 1 à 7.

vehicle licence plate detection is performed on an obtained fisheye image to obtain a vehicle plate region — S11

in response to the vehicle license plate region being in a non-reference direction, the vehicle licence plate region is enlarged based on all pixels of the vehicle licence plate region to obtain a deformed image of the vehicle licence plate — S12

reference direction correction is performed on the deformed image of the vehicle licence plate to obtain a to-be-detected image — S13

the to-be-detected image is recognized to obtain the output character corresponding to the vehicle license plate region. — S14

FIG. 1

the vehicle license plate recognition model is trained — S201

↓

a vehicle license plate detection model is trained — S202

↓

the fisheye image is obtained — S203

↓

the vehicle license plate detection model is configured to perform the vehicle license plate detection on the fisheye image to obtain the vehicle license plate region — S204

↓

interpolation is performed based on the pixel in the vehicle license plate region to generate the interpolated point — S205

↓

pixel values of all pixels within the predetermined range corresponding to each interpolated point are weighted and fused to obtain a pixel value of each interpolated point — S206

↓

the deformed image of the vehicle license plate is generated based on the pixel value of each interpolated point — S207

↓

the deformed image of the vehicle license plate is corrected to obtain the to-be-detected image — S208

↓

character detection is performed on the to-be-detected image to obtain character information corresponding to each character in the vehicle license plate region — S209

↓

the region image containing the character and the corresponding character information are input into the vehicle license plate recognition model to be recognized to obtain the output character corresponding to the vehicle license plate region — S210

FIG. 2

```
┌─────────────────────────────────────────┐
│              Fisheye image               │
└─────────────────────────────────────────┘
                    │
                    ▼
┌─────────────────────────────────────────┐
│  algorithm of key point of vehicle       │
│         licence plate                     │
└─────────────────────────────────────────┘
                    │
                    ▼
┌─────────────────────────────────────────┐
│ Fitting the key point to the vehicle     │
│        licence plate region              │
└─────────────────────────────────────────┘
                    │
                    ▼
┌─────────────────────────────────────────┐
│  fitting curved surface of weights of    │
│             a region                      │
└─────────────────────────────────────────┘
                    │
                    ▼
┌─────────────────────────────────────────┐
│ Zooming the resolution of the vehicle    │
│          licence plate                    │
└─────────────────────────────────────────┘
                    │
                    ▼
┌─────────────────────────────────────────┐
│ Mapping coordinates of a corrected       │
│       vehicle licence plate              │
└─────────────────────────────────────────┘
                    │
                    ▼
┌─────────────────────────────────────────┐
│  Vehicle plate recognition algorithm     │
└─────────────────────────────────────────┘
                    │
                    ▼
            ◇ Character category confidence level
              > confidence level threshold?  ◇──── YES ───┐
                    │                                      │
                   NO                                      │
                    ▼                                      │
┌─────────────────────────────────────────┐               │
│      Selecting N candidate characters    │               │
└─────────────────────────────────────────┘               │
                    │                                      │
                    ▼                                      │
┌─────────────────────────────────────────┐               │
│   Similarity determination algorithm     │               │
│ Selecting a character having the          │               │
│          greatest similarity             │               │
└─────────────────────────────────────────┘               │
                    │                                      │
                    ▼                                      │
┌─────────────────────────────────────────┐               │
│      Output a vehicle licence plate      │◄──────────────┘
└─────────────────────────────────────────┘
```

FIG. 3

a first training sample set and a template sample set are obtained

S2011a

the vehicle license plate recognition model may be trained iteratively based on an error value between a predetermined similarity and the similarity between the first sample image and a vehicle licence plate template corresponding to the first sample image

S2011b

FIG. 4

the first training sample set and the template sample set are obtained

S2012a

the first sample image and the vehicle license plate template corresponding to the first sample image are input to the vehicle licence plate recognition model and are weighted fused to obtain a corresponding character feature map

S2012b

the vehicle license plate recognition model is iteratively trained based on the error value between the predetermined similarity and a similarity between the character feature map and the corresponding vehicle license plate template

S2012c

FIG. 5

a second training sample set is obtained ⟋S2021

vehicle license plate detection is performed on the fisheye sample image by the vehicle license plate detection model, and the predicted number of corner points corresponding to the vehicle license plate, a predicted position of each corner point corresponding to the vehicle license plate, and a predicted category of each corner point corresponding to the vehicle license plate are obtained ⟋S2022

the vehicle license plate detection model is trained iteratively based on an error value between the true number of corner points and the predicted number of corner points corresponding to one vehicle license plate, an error value between the predicted position and the labeled position corresponding to one corner point, and an error value between the labeled category and the predicted category corresponding to one corner point ⟋S2023

FIG. 6

FIG. 7

FIG. 8

a distance between each pixel within the predetermined range corresponding to the interpolated point and the interpolated point is calculated to obtain a pixel distance corresponding to each pixel — S2061a

in response to the plurality of pixels being on a same straight line with the interpolated point, a ratio between distance weights of all pixels is determined based on a ratio between the pixel distances corresponding to all of the plurality of pixels — S2061b

based on the distance weight of one pixel on the straight line and the ratio between the distance weights of the pixels, distance weights of all other pixels on the straight line are determined — S2061c

based on the distance weight of one pixel on the straight line and the ratio between the distance weights of the pixels, distance weights of all other pixels on the straight line are determined — S2061d

FIG. 9

the interpolated point is connected to each pixel in the predetermined range to obtain a pixel vector corresponding to each pixel ⟋S2062a

a vehicle license plate vector corresponding to the vehicle license plate region is determined based on position information of the vehicle license plate region in the fisheye image ⟋S2062b

the angle information corresponding to each pixel is obtained based on the pixel vector of each pixel and the vehicle license plate vector ⟋ S2062c

the angle weight corresponding to the pixel is determined based on the angle information of the pixel ⟋ S2062d

FIG. 10

FIG. 11

Vehicle licence plate input

Z： 0.5
2： 0.4
7： 0.4

2： 0.8

3： 0.95

4： 0.5
N： 0.4
H： 0.4
B： 0.2

3： 0.7
6： 0.4

FIG. 12

Apparatus of recognizing vehicle licence plate          60

Detection module          61

Resolution adjustment module          62

Correction module          63

Recognition module          64

FIG. 13

FIG. 14

FIG. 15

**EP 4 526 864 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113673513 A